(19) Europäisches Patentamt
European Patent Office
Office européen des brevets

(11) EP 2 299 715 A1

(12) **EUROPEAN PATENT APPLICATION**
published in accordance with Art. 153(4) EPC

(43) Date of publication:
**23.03.2011 Bulletin 2011/12**

(21) Application number: **09794174.4**

(22) Date of filing: **07.07.2009**

(51) Int Cl.:
***H04N 7/26*** *(2006.01)*

(86) International application number:
**PCT/JP2009/003146**

(87) International publication number:
**WO 2010/004726 (14.01.2010 Gazette 2010/02)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **08.07.2008 EP 08012330**

(71) Applicant: **Panasonic Corporation**
**Kadoma-shi**
**Osaka 571-8501 (JP)**

(72) Inventors:
- **NARROSCHKE, Matthias**
  **63225 Langen (DE)**
- **WEDI, Thomas**
  **63225 Langen (DE)**

(74) Representative: **Grünecker, Kinkeldey, Stockmair & Schwanhäusser Anwaltssozietät**
**Leopoldstrasse 4**
**80802 München (DE)**

# (54) IMAGE CODING METHOD, IMAGE DECODING METHOD, IMAGE CODING DEVICE, IMAGE DECODING DEVICE, PROGRAM, AND INTEGRATED CIRCUIT

(57) An image coding method includes transforming a color space of a color image from a first color space to a second color space to generate a color space transformed color image (S12), removing part of samples included in the color space transformed color image to generate a subsampled color image (S13), coding the subsampled color image to generate a coded color image (S14), determining an upsampling coefficient used for upsampling (S16), determining a color space inverse transform coefficient for inversely transforming the color space from the second color space to the first color space (S17), and outputting the coded color image, the upsampling coefficient, and the color space inverse transform coefficient (S19).

FIG. 7A

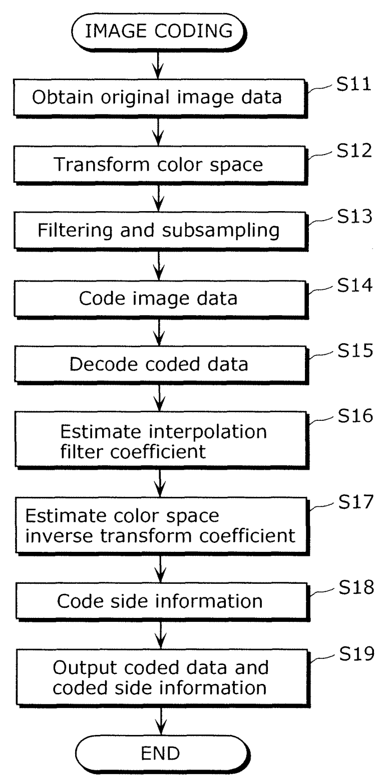


EP 2 299 715 A1

## Description

[Technical Field]

The present invention relates to a transform and an inverse transform of a color image consisting of plural color components and to a corresponding apparatus.

[Background Art]

Digital video or image cameras for capturing color images include a sensor capable of capturing the intensity of light filtered through different color filters. Such a sensor can be overlaid with a so-called Bayer filter consisting of a mosaic of red, blue and green filters in alternating rows of red and green, and green and blue. The prevalence of the green filter reflects the higher sensitivity of the human eye to the green color than to the red and blue colors. The mosaic of captured color samples is typically transformed in a different color space that can be more efficiently stored and rendered on the display. This transform is referred to as "demosaicing". Usually, the mosaic of red, green, and blue samples is transformed to an RGB color space, which also consists of red (R), green (G), and blue (B) samples.

A color image in RGB color space (an RGB image) consists of so-called pixels, each pixel consisting of three color components, namely red, green, and blue. The value of each component defines the intensity of the red, green, and blue light necessary to reproduce the color of the pixel. Pixel is the smallest formation part of an image. Color components of each RGB image pixel can be seen as coordinates (r,g,b) of this pixel within the RGB color space. The values of these coordinates are quantized using q bits, wherein the number of bits per pixel is also known as color depth. In present application, usually the value of $q = 8$ or $q = 16$ is applied equally for all color components resulting in color depth of 24 or 48 bits, respectively. In general, different color components and even different pixels might also be quantized using different number of bits.

The pixels in an RGB image are organized in a matrix of a size $N \times M$, which is also called (spatial) resolution of the image. If N and M are the same for all three color components, i.e. if the values of image color components can be organized in three equally sized color components - matrices, the color format of such image is referred to as RGB 4:4:4. There are also sensors capable of directly capturing the data in the RGB 4:4:4 color format. In general, color components of a single image may have different sizes, resulting from different sampling grids applied to each of them. The values of image color components can be used for instance, to render the image on a display screen, to store the image in a camera or in an external storage, to print the image, to process it further, or to transmit it over a transmission channel.

The further processing may include, for instance, a color format transform comprising transform into a different color space and/or subsampling of selected color components. Before subsampling, filtering may be applied.

For transmission and storing purposes, the color images in a predetermined color format, or a sequences of such color images forming a video, are typically further coded using a standardized or a proprietary image or video coding apparatus. The coding is performed in order to reduce the amount of data necessary to store or transmit the image or video. Such coding may employ various lossless and/or lossy compression mechanisms either standardized or proprietary.

In order to render the coded image or video on a display, the image data has to be received from the channel or retrieved from the storage and decoded. Decoding applies the operations inverse to the coding operations and results in an image in the color format used for the coding. Today's displays typically use signals derived from RGB 4:4:4 color format values to control the driving of the display pixels. Thus, a transform to this color format may be necessary after decoding. The color format inverse transform after decoding may include upsampling of the subsampled color image if subsampling has been applied. The upsampling is typically performed using an interpolation filter.

FIG. 1 illustrates an example of a video transmission chain according to conventional technology.

A video camera or still image camera 110 captures a real scene and delivers original image data 111 in a first color format, in particular, in the RGB 4:4:4 color format with 8 bits per color sample. The RGB 4:4:4 original image data 111 is further transformed into another color space, in this case, into a color space using color difference components such as YUV color space. In this color space, the input original image data 111 is divided into a luminance, denoted as Y, and into two color differences (chrominance) components, denoted as U and V. To obtain the data in YUV color space, the color space transform by the color space transform unit 120 is applied. Accordingly, the weighted values of R, G and B are added together to produce a single Y signal representing the overall brightness or luminance of the corresponding pixel. The U signal is then created by subtracting a Y from the blue signal of the original RGB and a scaling operation. The V signal is correspondingly created by subtracting Y from the red and then scaling by a different factor. The thus obtained image data 121 in YUV color space comprises the luminance component corresponding to the intensities of the captured image and two chrominance components which are typically considerably smoother than the luminance component. The smoothness of the chrominance images enables a better compression thereof.

The image 121 in the YUV color space has still the same size as the original RGB 4:4:4 image 111, for each pixel three 8-bit values of luminance and two chrominances are stored. This image format is referred to as YUV 4:4:4 format. The YUV 4:4:4 data 121 are further compressed by an encoder 130 and transmitted over a channel 140. The encoder 130 in this example performs coding according to H.264/AVC. The channel 140 here can be, for instance, any network, fixed or wireless, it may be a storage such as magnetic or optical discs, a flash memory, magnetic optical storage media, etc.

In order to render the image or video onto a display 170, the data is first retrieved/received from the channel 140 and decoded by a decoder 150. The decoder 150 performs the processes reversing the process by the encoder 130. If a lossy compression has been applied by the encoder 130, the reconstructed YUV 4:4:4 data 151 will possibly differ from original YUV 4:4:4 data 121. After decoding, the color space inverse transform is applied in the color space inverse transform unit 160 to obtain the decoded RGB 4:4:4 image data 161, which can be displayed on a display 170 or further stored or printed.

FIG. 2 illustrates another example of the transmission chain according to conventional technology. A real scene is captured by a camera 110. The output of the camera is the original image data 111 in the RGB 4:4:4 color format. A color transform is then applied in the color space transform unit 120 to the RGB 4:4:4 data 111 in order to obtain the 4:4:4 YUV data 121. As a consequence of color space transform, the two chrominance components U and V of the image in YUV 4:4:4 format are typically smooth in comparison with the luminance component Y. This smoothness can already be used at this stage to reduce the amount of data necessary to transmit/store the image. This is performed by subsampling 210 the chrominance components in horizontal and/or vertical direction by the subsampling unit 210. Subsampling reduces the number of samples per image, for instance, by omitting certain samples. A subsampling grid containing the samples that has not been omitted is a subset of the original or filtered image values and typically has a regular form. Before subsampling, a filter may be applied which is usually a low-pass filter. Several low-pass filters have been suggested by the ISO (International Organization for Standardization) and accepted in the MPEG (Moving Picture Experts Group) and VCEG (Video Coding Experts Group) community for this purpose. The filtered image is subsampled, for example, by leaving out every second line and every second column, which leads to a number of chrominance component values being four times smaller than the number of luminance component values. Such a format is called YUV 4:2:0 format. Thus, the color format transform unit 201 in this case includes a color space transform unit 120, as well as filtering and subsampling unit 210. If the original image data 111 is already in a desired color space, the color format transform unit 201 may also only include the subsampling (and possibly filtering). The image data 211 in the second color format YUV 4:2:0 are then passed to the encoder 130, stored or transmitted to/via a channel 140, and decoded by the decoder 150. Another subsampling grid can be used such as, for instance, 4:2:2 grid which leaves out every second column of the (filtered) chrominance components, or any other sampling grid.

The encoder 130 is an image or video encoder such as, for instance, image compression standard JPEG or JPEG 2000, or video coding standard H.261, H.263, H.264/AVC, MPEG-1, MPEG-2, MPEG-4, any other standardized or proprietary image or video standard. The operations of such encoders include typically subdividing the image data into smaller blocks, transforming the data in blocks by a linear transform (e.g. discrete cosine transform) and efficiently coding the transformed data by means of an entropy encoder. Other techniques such as, for example, motion compensation or spatial prediction may be employed as well. During all these operations, the luminance and chrominance components of the image are typically treated separately.

The data received/retrieved from the channel 140 is decoded by the decoder 150 corresponding to the employed encoder 130. The decoded image data 151 in YUV 4:2:0 format are then input to the color format inverse transform 202 comprising upsampling and interpolation unit 220, which upsamples the subsampled chrominance components to the original size by interpolating the missing pixels. The interpolated data 221 in YUV 4:4:4 color format are then inversely transformed to the RGB color space by color space inverse transform 160, and the resulting image data 161 in RGB 4:4:4 color format are then displayed on the display 170 or printed or stored.

The color format transform unit 201 includes the color space transform unit 120 and the filtering and subsampling unit 210, and preprocesses the image data in such a manner that they can be more efficiently stored or further coded by the encoder 130. While color space transform alone does not reduce the amount of color components per pixel, the subsampling process as described above (from YUV 4:4:4 to YUV 4:2:0) already reduces the amount of color components per pixel to one half of its original amount. For some image contents, this reduction followed by an interpolation is almost unperceivable by a human. Especially the natural images can be reconstructed by interpolation 220 without noticeable loss. In general, the color space transform 120 into the YUV color space already reduces the correlation between the color components by subtracting the luminance from the remaining color components.

[Citation List]

[Patent Literature] European Patent Application Publication No. 1176832

[0004]
[NPL 1]

[Summary of Invention]

[Technical Problem]

However, there are images for which other types of color space transforms might lead to better results. A fixed interpolation filter may be sufficient in most cases. However, there will always be images with content, where the filtering using another type of filter would be advantageous. For some image contents, subsampling and then upsampling may lead to noticeable artifacts. The quality of image reconstruction as well as compression gain varies considerably with the color format (color space, subsampling) and with the properties of the image or video to be coded. Furthermore, since the YUV color space, used in most of the video coding standards today, is not always efficient for the coding purposes, the coding (compression) gain is limited. Moreover, the upsampling is typically performed using a fixed interpolation filter, which may cause annoying disparities of the so upsampled image.

The aim of the present invention is to overcome the above-mentioned problems and to provide a method and an apparatus for color format transform and inverse transform that is efficient for various image contents.

[Solution to Problem]

An image coding method according to an aspect of the present invention codes a color image. More specifically, the image coding method includes: transforming a color space of the color image from a first color space to a second color space which is different from the first color space to generate a color space transformed color image; removing part of samples included in the color space transformed color image to generate a subsampled color image; coding the subsampled color image to generate a coded color image; determining an upsampling coefficient used for upsampling in which samples are interpolated; determining a color space inverse transform coefficient for inversely transforming the color space from the second color space to the first color space; and outputting the coded color image, the upsampling coefficient, and the color space inverse transform coefficient.

As described above, determining, in the image coding apparatus, the parameter (the color space inverse transform coefficient and upsampling coefficient) used by the image decoding apparatus makes the image decoding apparatus less complex. Furthermore, it is possible to improve the quality of the decoded image since an original image (color image) that can be used only in the image coding apparatus can be used. Note that the "sample" in subsampling and upsampling may be, for example, pixel values, color componets, and more specifically, the chroma componant of each pixel.

The image coding method may further include: decoding the coded color image to generate a decoded color image; and interpolating samples in the decoded color image to generate an interpolated color image. In the determining of an upsampling coefficient, the upsampling coefficient may be determined so as to minimize a mean square error between the decoded color image and the color space transformed color image.

Furthermore, the image coding method may further include inversely transforming a color space of the interpolated color image from the second color space to the first color space to generate a color space inverse transformed color image. In the determining of a color space inverse transform coefficient, the color space inverse transform coefficient may be determined so as to minimize a mean square error between the color space inverse transformed color image and the color image.

When the image data is coded, the quantization noise is superimposed. Accordingly, even if the coded data is decoded, image data completely identical to the image data before coding cannot be obtained. In response to this, the color space inverse transforming includes a process for removing quantization noise, and is not just a reverse process of the transforming. More specifically, it is desirable to determine the color space inverse transform coefficient so as to minimize a mean square error between the pre-coding image and the coded image. The same applies to the interpolating as well.

The image coding method may further include determining the color space transform coefficient based on a characteristic of the color image. In the transforming, the color space of the color image may be transformed from the first color space to the second color space based on the color space transform coefficient determined in the determining of a color space transform coefficient, and in the outputting, the color space transform coefficient may further be outputted.

The image coding method may further include coding side information including the upsampling coefficient, the color space inverse transform coefficient, and the color space transform coefficient to generate coded side information. In the outputting, the coded color image and the coded side information may be outputted.

An image decoding method according to an aspect of the present invention decodes a color image. More specifically, the image decoding method includes: obtaining a coded color image, an upsampling coefficient, and a color space inverse transform coefficient; decoding the coded color image to generate a decoded color image; interpolating, using the upsampling coefficient, samples in the decoded color image to generate an interpolated color image; and inversely transforming, using the color space inverse transform coefficient, a color space of the interpolated color image from the second color space to the first color space to generate a color space inverse transformed color image.

As described above, the interpolating and the inversely transforming using the upsampling coefficient generated through the image coding method allows removing the rounding error superimposed by coding. Furthermore, successive execution of the two processes optimizes the process.

An image coding apparatus according to an aspect of the present invention codes a color image. More specifically, the image coding apparatus includes: a color space transform unit configured to transform a color space of the color image from a first color space to a second color space which is different from the first color space to generate a color space transformed color image; a subsampling unit configured to remove part of samples included in the color space transformed color image to generate a subsampled color image; a coding unit configured to code the subsampled color image to generate a coded color image; an upsampling coefficient determining unit configured to determine an upsampling coefficient used for upsampling in which samples are interpolated; a color space inverse transform coefficient determining unit configured to determine a color space inverse transform coefficient for inversely transforming the color space from the second color space to the first color space; and an outputting unit configured to output the coded color image, the upsampling coefficient, and the color space inverse transform coefficient.

An image decoding apparatus according to an aspect of the present invention decodes a color image. More specifically, the image decoding apparatus includes: an obtaining unit configured to obtain a coded color image, an upsampling coefficient, and a color space inverse transform coefficient; a decoding unit configured to decode the coded color image to generate a decoded color image; an upsampling unit configured to interpolate, using the upsampling coefficient, samples in the decoded color image to generate an interpolated color image; and a color space inverse transform unit configured to inversely transform, using the color space inverse transform coefficient, a color space of the interpolated color image from the second color space to the first color space to generate a color space inverse transformed color image.

A program according to an aspect of the present invention causes a computer to code a color image. More specifically, the program causing the computer to execute: transforming a color space of the color image from a first color space to a second color space which is different from the first color space to generate a color space transformed color image; removing part of samples included in the color space transformed color image to generate a subsampled color image; coding the subsampled color image to generate a coded color image; determining an upsampling coefficient used for upsampling in which samples are interpolated; determining a color space inverse transform coefficient for inversely transforming the color space from the second color space to the first color space; and outputting the coded color image, the upsampling coefficient, and the color space inverse transform coefficient.

A program according to another aspect of the present invention causes a computer to decode a color image. More specifically, the program causing the computer to execute: obtaining a coded color image, an upsampling coefficient, and a color space inverse transform coefficient; decoding the coded color image to generate a decoded color image; interpolating, using the upsampling coefficient, samples in the decoded color image to generate an interpolated color image; and inversely transforming, using the color space inverse transform coefficient, a color space of the interpolated color image from the second color space to the first color space to generate a color space inverse transformed color image.

An integrated circuit according to an aspect of the present invention codes a color image. More specifically, the integrated circuit includes: a color space transform unit configured to transform a color space of the color image from a first color space to a second color space which is different from the first color space to generate a color space transformed color image; a subsampling unit configured to remove part of samples included in the color space transformed color image to generate a subsampled color image; a coding unit configured to code the subsampled color image to generate a coded color image; an upsampling coefficient determining unit configured to determine an upsampling coefficient used for upsampling in which samples are interpolated; a color space inverse transform coefficient determining unit configured to determine a color space inverse transform coefficient for inversely transforming the color space from the second color space to the first color space; and an outputting unit configured to output the coded color image, the upsampling coefficient, and the color space inverse transform coefficient.

An integrated circuit according to another aspect of the present invention decodes a color image. More specifically, the integrated circuit includes: an obtaining unit configured to obtain a coded color image, an upsampling coefficient, and a color space inverse transform coefficient; a decoding unit configured to decode the coded color image to generate a decoded color image; an upsampling unit configured to interpolate, using the upsampling coefficient, samples in the decoded color image to generate an interpolated color image; and a color space inverse transform unit configured to inversely transform, using the color space inverse transform coefficient, a color space of the interpolated color image from the second color space to the first color space to generate a color space inverse transformed color image.

Note that, the present invention is not only achieved as an moving picture coding method (apparatus) and an moving picture decoding method (apparatus), but also as an integrated circuit achieving the functions, and as a program causing a computer to execute the functions as well. Needless to say, such a program can be distributed via recording media such as CD-ROM and transmission media such as the Internet.

This is achieved by the features set forth in the independent claims.

Preferred embodiments include the subject matter of the dependent claims.

It is the particular approach of the present invention to determine the color format inverse transform parameters at the side of color format transform and to provide them together with the transformed image or video data. It is further the particular approach of the present invention to receive the color format inverse transform parameters at the inverse transform side and to use them in the color format inverse transform operation.

Determining the color format inverse transform parameters at the color format transform side is advantageous since the original (non-transformed) color image and the entire information about its original format are still available. Furthermore, determining the color format inverse transform parameters at the transform side helps keep the decoder less complex and, at the same time, to achieve improved quality resulting from the possibility of choosing various color format inverse transform coefficients that may take into account information available at the encoder.

According to a first aspect of the present invention, a method for color format transform is provided for converting a color image from a first color format into a second color format. The method comprises a step of determining color format inverse transform coefficients for use in the inverse transform operation of the color image from the second color format into the first color format. The color format of a color image is a format in which the color components of the image are stored, the format including, for instance, a color space and/or the subsampling. Here, the color space is specified, for instance, by its name, if it is a standardized and/or well-known color space, or by means of a transform coefficient from a known color space to the color space to be specified. The subsampling is specified by a subsampling grid and the number of bits per sample. Again, particular color grids have standardized names as, for instance, 4:4:4 (meaning no subsampling), 4:2:0 or 4:2:2, the latter two referring to a ratio between the number of samples per color component. The exact position of the samples for the 4:2:0 sampling may vary and the decoder/inverse transform unit does not typically receive the information about the exact sampling grid from the encoder/converter.

According to a further aspect of the present invention, a color format converter is provided for converting a color image from a first color format into a second color format. The color format transform unit comprises a determining unit for determining color format inverse transform coefficients for use in the inverse transform operation of the color image from the second color format into the first color format. The transformed image together with the determined color format inverse transform coefficients is provided, for instance, for a transmission over a channel, which may be any wired or wireless channel. Alternatively, the transformed image together with the determined color format inverse transform coefficients may be provided for storing in various kinds of storages or media, such as USB sticks, optical or magnetic hard discs or media like DVD, CD, BD, etc. Both the transformed image and the determined color format inverse transform coefficients may be coded.

Preferably, the determining of the color format inverse transform coefficients is based on the properties of the color image to be transformed. This allows adaptive choice of the inverse transform coefficients according to the properties of the color image. Since the possible quality loss of the color image after being inversely transformed depends on its properties, the adaptive choice of the color format inverse transform parameters results in improvement of the inversely transformed image quality.

Preferably, for the determination, the transformed color image is further inversely transformed and the color format inverse transform coefficients are estimated based on the properties of an inversely transformed image and on the applied transform operation. It is of advantage, to have additionally the original non transformed image available. Availability of the inversely transformed image and possibly the original non transformed image enables adaptive choice of the inverse transform parameters according to the properties of the inversely transformed image and according to the applied color format transform. The color format inverse transform parameters are estimated, for instance, using a linear or a non-linear optimization method with a predefined cost function. In particular, if both the color image in the first color format and the inversely transformed image are available, estimation based on minimizing the mean square error between the color image in the first color format and the inversely transformed image is preferably applied.

Preferably, in the color format transform, the color space of the color image is transformed from a first color space into a second color space. The color format inverse transform coefficients include color space inverse transform coefficients; the color space inverse transform is to transform the color image from the second color space to the first color space. The first and the second color space may be one of the well-known color spaces. These may be, for instance, color spaces based on red, green and blue components (e.g. RGB, sRGB), or color spaces based on luminance and chrominance components (e.g. YIQ, YUV, YCbCr), or color spaces based on hue and saturation (e.g. HSV, HSI), or CMYK, or any other color spaces.

However, the second color space is preferably an adaptive color space determined adaptively by estimating color space transform coefficients based on the color image to be transformed, wherein the color format transform transforms the color space of the color image from the first color space to the second color space using the estimated color space transform coefficients. In particular, the color space transform coefficients are estimated based on a decorrelation transform, especially Karhunen-Loève transform. Decorrelation transform decorrelates the color space components. The resulting adaptive color space enables thus an efficient representation of the image. For the same quality of image, lower rate may be achieved in comparison to a fixed color space transform. The color space inverse transform coefficients can then be estimated as described above.

Preferably, the color format transform subsamples the color image in the first color format or in the second color space format, the subsampled color image having less samples than the input color image. In particular, the color format transform filters the color image in the first color format or in the second color space format before subsampling. In particular, the filtering is performed by a low-pass filter. However, other filters can also be used. The filters other than low-pass filters may be advantageous for images with certain properties, for instance, containing a lot of edges.

Preferably, the color format inverse transform coefficients include interpolation filter coefficients, interpolation filter being used for upsampling of the downsampled color image. In particular, the interpolation filter coefficients are estimated as Wiener filter coefficients. However, the interpolation filter coefficients can also be estimated based on optimizing another measure than mean square error, non-linear filters may be deployed; the upsampled (inversely transformed) image need not be necessarily used for the estimation.

Preferably, the color format inverse transform coefficients are coded using an entropy encoder. The entropy encoder may be based on known entropy codes such as Huffman codes, Golomb codes, exponential Golomb codes, arithmetic codes, or any other entropy codes. Entropy coding the coefficients enables reduction of the rate necessary for transmitting them or storing them in a medium.

In a preferred configuration, the color format inverse transform coefficients are determined individually for each slice of the color image or color image video sequence. This enables adapting the color format transform and/or inverse transform on the properties of the image to be transformed and even on its parts. Units other than slice may be used as well, such as macroblocks, groups of macroblocks other than slices, fields (if interlacing is applied), frames, etc.

Alternatively, the color format inverse transform coefficients are determined once per a plurality of color images. The plurality of color images may be a predefined fixed number, for instance, the color format inverse transform coefficients can be determined each second, third, fourth, etc. image in order to reduce the amount of data necessary for their transmission or storage. If the video sequence is smooth in time, the adapting the transform and/or inverse transform parameters for plurality of images shall provide sufficient quality gain/coding gain. However, in some cases it may be advantageous to provide the color format inverse transform coefficients for a varying number of color images (i.e. video frames), for instance, per group of pictures if temporally predictive coding mechanism is applied and if the size of a group of pictures is variable. The number of images can also be chosen in accordance with the video sequence properties, such as temporal smoothness, occurrence of scene changes, etc.

Preferably, the color format inverse transform coefficients relate to color space inverse transform and coefficients related to interpolation filter, the coefficients related to color space inverse transform being determined less frequent than the coefficients related to interpolation filter. This allows scaling the adaptivity: in some cases it may be beneficial to keep the color space transform unchanged, for instance, during a group of pictures. The color format inverse transform coefficients comprising interpolation filter coefficients may vary faster. Other configurations are possible where a predefined number of images, for which the coefficients related to color space inverse transform have to be determined, can be smaller than a predefined number of images, for which the coefficients related to interpolation filtering are determined. However, the determining of the color format inverse transform coefficients related to the interpolation filtering may also be performed less frequent than the determination of the color format inverse transform coefficients related to the color space inverse transform.

Preferably, after the color format transform, the color image of a video sequence of color images is coded according to an image or video coding standard, like JPEG, JPEG2000, MPEG-2, MPEG-4, H.263, and H.264/AVC. Another video coding standards or proprietary video coding methods may equally be used. Coding the color image or video sequence reduces the amount of data needed for storing or transmission thereof. However, the transformed image or video data in the second color format can also be directly stored or transmitted.

In particular, video coding standard H.264/AVC is applied and the color format inverse transform coefficients are provided within the H.264/AVC Supplemental Enhancement Information (SEI) message. This allows an H.264/AVC standard compliant deployment of the present invention.

In accordance with another aspect of the present invention, an image coding method and an image coding apparatus are provided that include color format transform as described above and compression of the image after the color format transform. Such image coding apparatus or video coding apparatus may be a standardized or a proprietary image or video coding apparatus that implements the color format transform in accordance with the present invention as a mandatory or optional feature.

According to a further aspect of the present invention, a method for color format inverse transform is provided, which inversely transforms a transformed color image from a second color space into a first color space. First, color format inverse transform coefficients are obtained together with the transformed image in the second color format. Then, the transformed color image in the second color format is inversely transformed into the first color format employing the obtained color format inverse transform coefficients.

According to a yet further aspect of the present invention, a color format inverse transform unit is provided for inversely transforming a transformed color image from a second color space into a first color space. The inverse transform unit is capable of obtaining color format inverse transform coefficients together with the transformed image in the second color format. The inverse transform unit is further capable to inversely transform the transformed color image from the second color format into the first color format employing the color format inverse transform coefficients obtained. The transformed image together with color format inverse transform coefficients are obtained, for instance, by receiving from a channel, which may be any wired or wireless channel. Alternatively, the transformed image together with the color format inverse transform coefficients may be provided by retrieving from storage of various kinds such as USB sticks, optical discs or magnetic hard disks or media like DVD, CD, BD, etc. Both the transformed image and the determined color format inverse transform coefficients may be coded.

Preferably, the color format deconverting includes transforming the color space of the color image from a second color space to a first color space. Here, the first and the second color space may be one of the known color spaces like RGB, YUV, HIS, etc. The color format inverse transform coefficients include preferably color space inverse transform coefficients. In particular, the second color space is an adaptive color space determined adaptively by estimating color space transform coefficients based on the color image to be transformed. In particular, the color space transform coefficients are estimated based on a decorrelation transform, especially the Karhunen-Loève transform.

Preferably, the color format inverse transform upsamples the transformed color image, the upsampled image having more samples than the input transformed color image.

In particular, the upsampling is performed by using interpolation filtering; the interpolation filter coefficients being obtained within the color format inverse transform coefficients. Obtaining the interpolation filter coefficients enables adaptive interpolation filtering in dependence on the received coefficients and provides a quality gain without increasing the complexity of the decoder by, for instance, postprocessing methods. In particular, the interpolation filter coefficients are estimated as Wiener filter coefficients. However, any other filtering and determining of the filter coefficients is also applicable.

Preferably, obtaining the color format inverse transform coefficients includes entropy decoding thereof.

In accordance with a preferred configuration of the present invention, the color format inverse transform coefficients are obtained individually for each slice of the color image or the color image video sequence.

Alternatively, the color format inverse transform coefficients may be determined once per a plurality of color images.

Preferably, the color format inverse transform coefficients include coefficients related to color space inverse transform and coefficients related to interpolation filter, the coefficients related to color space inverse transform being obtained less frequent than the coefficients related to interpolation filter.

Preferably, obtaining the transformed image in the second color format includes decoding thereof in accordance with an image or video coding standard, like JPEG, JPEG2000, MPEG-2, MPEG-4, H.263, and H.264/AVC.

In particular, the video coding standard H.264/AVC is applied and the color format inverse transform coefficients (the filter coefficients and/or the color space inverse transform coefficients) are obtained within the H.264/AVC Supplemental Enhancement Information (SEI) message.

In accordance with yet another aspect of the present invention, a method for image decoding and an image decoding apparatus are provided including decompression of the obtained image and color format inverse transform of the decompressed image as described above.

[Advantageous Effects of Invention]

As described above, determining, at the coding apparatus, the parameters (color space inverse transform coefficients and upsampling coefficients) used in the decoding apparatus helps keeping the decoding apparatus less complex. Furthermore, the original image (color image) only available in the coding apparatus can be used for determining the parameter, which improves the quality of the decoded image.

[Brief Description of Drawings]

[FIG. 1] FIG. 1 is a block diagram illustrating a conventional image or video color format transform and inverse transform, including color space transform.

[FIG. 2] FIG. 2 is a block diagram showing another conventional video or image format transform and inverse transform, including color space transform and sub/upsampling with filtering.

[FIG. 3] FIG. 3 is a block diagram illustrating the color format transform and inverse transform in accordance with an embodiment of the present invention, as a part of an image transmission system.

[FIG. 4A] FIG. 4A is a block diagram illustrating the color format transform according to an embodiment of the present invention.

[FIG. 4B] FIG. 4B is a block diagram illustrating the color format inverse transform according to an embodiment of the present invention.

[FIG. 5] FIG. 5 is a schematic drawing of sampling adaptive color space in accordance with an embodiment of the present invention.

[FIG. 6A] FIG. 6A is a block diagram illustrating the color format transform according to another embodiment of the present invention.

[FIG. 6B] FIG. 6B is a block diagram illustrating the color format inverse transform according to another embodiment of the present invention.

[FIG. 7A] FIG. 7A is a flowchart showing the operations of the image coding apparatus shown in FIG. 6A.

[FIG. 7B] FIG. 7B is a flowchart illustrating the operations of the moving picture decoding apparatus shown in FIG. 6B

[FIG. 8A] FIG. 8A is a block diagram illustrating the color format transform in accordance with yet another embodiment of the present invention.

[FIG. 8B] FIG. 8B is a block diagram illustrating the color format inverse transform in accordance with yet another embodiment of the present invention.

[FIG. 9] FIG. 9 is a block diagram illustrating the color format transform and inverse transform in accordance with yet another embodiment of the present invention.

[Description of Embodiments]

The above and other objects and features of the present invention will become more apparent from the following description and preferred embodiments given in conjunction with the accompanying drawings.

The present invention relates to a color format transform and inverse transform of a color image consisting of a plurality of color components. These components may belong to an arbitrary color space. The number of samples per component is not necessarily the same. In general, the format of the image, i.e. the particular color space and sampling, depends on the source. Typically, the images taken by a camera are output therefrom in the RGB format having three components red, green and blue, and usually having the same number of samples per component, resulting in RBG 4:4:4 color format, and having the same number of bits per sample, typically 8 or 16.

The purpose of the color format transform is to transform the color image from its original first color format (i.e. format in which the color components are input to the color format transform) to another format. The format here refers to a color space and/or to the way of sampling.

In the state of the art as described above, the color format transform is fixed. This means that regardless of the image content of the image to be transformed, the color transform and/or possibly filtering and subsampling is performed in the same way. Both color transform and filtering and sampling are designed so as to work efficiently for the majority of typical images. The efficiency here has two meanings. Firstly, the color transform aims at reducing the correlation between the particular color components. This is achieved in YUV color space having one luminance component and two different chrominance components. The chrominance components of such color space, being smoother than the luminance component, enable later subsampling so that the distortion of the image resulting from such rate reduction is reduced. Secondly, if another step of coding including, for instance, a compression is applied, the compression gain with respect to the resulting distortion will depend on the input image format. The image after a suitable color format transform can be compressed more efficiently, i.e., with higher compression gain. Thus, using a fixed and independent color format transform and inverse transform, typical in the conventional applications, limits the coding efficiency.

The present invention enables a color format transform and inverse transform with increased efficiency by determining the color format inverse transform coefficients by the color format converter and by providing the color format inverse transform coefficients together with the coded image data.

FIG. 3 illustrates an image coding apparatus 10 and an image decoding apparatus 20 in accordance with an embodiment of the present invention as a part of a video transmission system.

The image coding apparatus 10 illustrated in FIG. 3 at least includes a color format transform unit 310 and determining unit (color space estimation unit) 320 and the encoder 130. The image coding apparatus 10 generates a coded color image by coding original image data (color image) 111 obtained from a camera 110. Note that, the camera 110 may be an external device connected to the image coding apparatus 10, and may also be a component of the image coding apparatus 10. The same applies to the rest of embodiments.

The camera 110 provides a sequence of original image (video frames) data 111 which is composed of three equally sampled color components of the RGB color space (RGB 4:4:4 color format). A different sampling grid is also possible, e.g. Bayer Pattern grid. The original image data 111 is input to a color format transform unit 310 which converts the image data 111 from a first color format into a second color format image data 311. The original image data 111 may be input to the determining unit 320. The determining unit 320 can determine the color format inverse transform coefficients 321 used in the color format inverse transform unit 330. The determined color format inverse transform coefficients 321 are then provided together with the transformed image data 311 in the second color format.

The image data 311 after color format transform can be further coded by the encoder 130 which, in this example, is an H.264/AVC video encoder. Note that the encoder 130 includes an orthogonal transform unit (not shown) which performs orthogonal transform on the image data, a quantization unit (not shown) which quantizes the image data, and a variable-length coding unit (not shown) which performs variable-length coding. The decoder 150 may further include a motion compensation unit (not shown) and a space estimation unit (not shown).

The coded data together with the coded side information comprising the color format inverse transform coefficients 321 are then transmitted over a channel 140. The channel 140 can be any wireless or wired channel, the transmission can be unicast, multicast or broadcast, according to the requirements of the target application.

The image decoding apparatus 20 illustrated in FIG. 3 at least include a decoder 150 and a color format inverse transform unit 330. The image decoding apparatus 20 decodes the coded data obtained from the image coding apparatus 10 via the channel 140, and displays the decoded data on the display 170. Note that, the display 170 may be an external device connected to the image decoding apparatus 20, and may also be a component of the image decoding apparatus 20. The same applies to the rest of embodiments.

The coded data is first received by the decoder 150 and decoded. Subsequently the data is provided to the color format inverse transform unit 330. Note that, the decoder 150 may further include a variable-length decoding unit (not shown) which performs variable-length decoding on the coded data, an inverse quantization unit (not shown) which performs inverse quantization, and an inverse orthogonal transform unit (not shown) which performs inverse orthogonal transform. The decoder 150 may further include a motion compensation unit (not shown) and a space estimation unit (not shown).

The decoder 150 performs the processes reversing the process by the encoder 130. In this example, the decoder 150 is an H.264/AVC decoder. The color format inverse transform coefficients 322 are also provided to the color format inverse transform unit 330. In the color format inverse transform unit 330, the received color format inverse transform coefficient 322 is used for inversely transforming the image data 312. The resulting image data 331 may then be displayed on the display 170.

In this example, the camera 110 is a video camera. However, it may be a camera capturing only still images. The camera 110 may also output the image in a format other than RGB 4:4:4 format, for instance, a mosaic raw data format, a YUV format, or any other color format wherein the outputted color components do not necessarily have the same sampling and depth. The determination of color format inverse transform coefficients 322 may be determined for color space transform and/or the filtering and/or the subsampling. Transmitting the data over a channel 140 or storing in a storage medium may be performed separately for the image data and for the side information comprising the color format inverse transform coefficients 322. The color format inverse transform coefficients 322 are stored or transmitted together and/or multiplexed with the corresponding image data. When performing coding and decoding, it is not limited to the H.264/AVC standard; it can be any of image or video data compression standards such as, for instance, JPEG, JPEG 2000, MPEG-1, MPEG-2, MPEG-4, H.261, H.263, and DIRAC or any other standardized or proprietary coding and decoding mechanism. After performing the color format inverse transform, the image data may be displayed on various types of a display including CRT, OLED, LCD, at various types of terminals, and it can be printed out or stored.

FIGS. 4A and 4B are block diagrams illustrating the transmission chain circuit including a color format transform unit 400 and a color format inverse transform unit 480 according to another embodiment of the present invention. Here, FIG. 4A illustrates the image coding apparatus 10 on the transmission side, and FIG. 4B illustrates the image decoding apparatus 20 on the reception side.

The image coding apparatus 10 illustrated in FIG. 4A includes a color format transform unit 400, an encoder 130, a color space estimation unit 430, a coefficient estimation unit 440, a decoder 450, and a coefficient coding unit 460. Furthermore, the color format transform unit 400 may include a color space transform unit 410, a filtering and subsampling unit 420, and may further include a color space estimation unit 430.

A video camera 110 provides original image data 111 in the RGB 4:4:4 color format. The color components of the original image 111 in the RGB 4:4:4 color format are called R, G, and B. The color format transform unit 400 comprises a color space estimation unit 430 for estimating the color space transform matrix. This is performed based on the properties of the original image data 111 in the RGB 4:4:4 color format, such as the statistics (e.g. the first and second moments). The estimated color space color transform matrix is then employed to transform the original image data 111 from the RGB 4:4:4 color format into a new color space, an adaptive color space (ACS). The resulting ACS video data 411 has still the 4:4:4 sampling format. The color space transform unit 410 may use various criterions for the estimation purpose. One criterion may be the decorrelation of the three color components A, C and S of the ACS color space. A Karhunen-Loève transform allows generating three ACS color components out of the three RGB color components that are uncorrelated among each other. This is beneficial, for instance, for encoders that code the three color components independently. The resulting video data in the ACS color space can further be low-pass filtered and downsampled using low pass filters, for instance, as defined by ISO, but all other filters are also possible.

First, as shown in Equation 1, the color space estimation unit 430 determines the transform matrix $T_{KLT}$ of the Karhunen-Loève transform that produces uncorrelated color components A, C, and S as follows: $T_{KLT}$ is orthogonal transform which optimally reduces correlation, and it is possible to completely eliminate the correlation between arbitrary axes in the transformed coordinate system. This means the signals are transformed to the coordinate system with least redundancy, and the transform is most suitable as the orthogonal transform for compression.

[Math. 1]

$$\begin{pmatrix} A(x,y) \\ C(x,y) \\ S(x,y) \end{pmatrix} = T_{KLT} \cdot \begin{pmatrix} R(x,y) \\ G(x,y) \\ B(x,y) \end{pmatrix} \qquad \text{(Equation 1)}$$

Here, x and y are indexes within each color component specifying particular spatial samples. The color space spanned by the color components A, C, and S is the adaptive color space. It is called adaptive, since it adapts to the properties of the color image or video data. For instance, for determining the transform matrix $T_{KLT}$, statistical properties of the color image are used.

The transform matrix $T_{KLT}$ is then employed in color space transform in the color space transform unit 410. In addition, the color space transform unit 410 performs the following scaling and mean adjustment in Equation 2.

[Math. 2]

$$\begin{pmatrix} A'(x,y) \\ C'(x,y) \\ S'(x,y) \end{pmatrix} = T_{KLT} \cdot \begin{pmatrix} (A(x,y)-m_A)\cdot s_A + 2^{(b_A-1)} \\ (C(x,y)-m_C)\cdot s_C + 2^{(b_C-1)} \\ (S(x,y)-m_S)\cdot s_S + 2^{(b_S-1)} \end{pmatrix} \qquad \text{(Equation 2)}$$

Here, coefficient $m_A$ is the mean value of A, coefficient $m_C$ is the mean value of C, and coefficient $m_S$ is the mean value of S. All means are determined by the color space estimation. The scaling coefficient $s_A$ adjusts the dynamic range of A' according to Equation 3.

[Math. 3]

$$s_A = \min\left(1, \frac{2^{(b_A-1)}}{\max(|A(x,y)-m_A|)}\right) \qquad \text{(Equation 3)}$$

The scaling coeffcient $s_C$ adjusts the dynamic range of C' according to Equation 4.

[Math. 4]

$$s_C = \min\left(1, \frac{2^{(b_C - 1)}}{\max\left(\left|C(x,y) - m_C\right|\right)}\right) \quad \text{(Equation 4)}$$

The scaling coefficient $s_S$ adjusts the dynamic range of S' according to Equation 5.

[Math. 5]

$$s_S = \min\left(1, \frac{2^{(b_S - 1)}}{\max\left(\left|S(x,y) - m_S\right|\right)}\right) \quad \text{(Equation 5)}$$

Parameter $b_A$ is the number of bits used to represent the samples of the color component A', parameter $b_C$ is the number of bits used to represent the samples of the color component C', and parameter $b_S$ is the number of bits used to represent the samples of the color component S'. All scaling coefficients are determined by the color space estimation unit 430.

After the color space transform by the color space transform unit 410, the color components C' and S' are filtered and subsampled by the filtering and subsampling unit 420, for instance, according to ISO/IEC JTC1/SC29/WG11 N6295 ("Color format down-conversion for test sequence generation"), resulting in the color components C" and S" and in the color format ACS 4:2:0. The sampling grid of the color components in the RGB color space and the ACS color space are shown in FIG. 5. The position of the samples in the ACS color space is chosen according to those defined in the H.264/AVC standard.

The color components A', C" and S" are then rounded to the next integer and clipped to the ranges $[0;2^{bA}-1]$, $[0;2^{bC}-1]$, and $[0;2^{bS}-1]$ respectively.

The rounded and clipped color components A', C" and S" 421 of the adaptive color space are further coded by the encoder 130, in this example the encoder 130 is an H.264/AVC standard compliant encoder.

Still at the side of the color format transform, an H.264/AVC decoder 450 is used to decode the coded data 131. The data after image decoding 451 may differ from the data before image coding 421 if the encoder 130 applies a lossy compression.

After decoding, color components A", C'" and S'" 451 are obtained. The color transform coefficients $s_A$, $s_C$, $s_S$, $m_A$, $m_C$, and $m_S$ are further used for the estimation of the other color format inverse transform coefficients by the coefficient estimation unit 440.

The transform of the decoded video data in the ACS 4:2:0 color format to the decoded video data in the RGB 4:4:4 color format is performed as follows. In a first step, a scaling and mean adjustment is performed according to Equation 6.

[Math. 6]

$$\begin{pmatrix} \tilde{A}(x,y) \\ \tilde{C}(x,y) \\ \tilde{S}(x,y) \end{pmatrix} = \begin{pmatrix} \left(A''(x,y) - 2^{(b_A - 1)}\right) \div s_A + m_A \\ \left(C'''(x,y) - 2^{(b_C - 1)}\right) \div s_C + m_C \\ \left(S'''(x,y) - 2^{(b_S - 1)}\right) \div s_S + m_S \end{pmatrix} \quad \text{(Equation 6)}$$

In a second step, the decoded video data in the RGB 4:4:4 color format is determined. The three color components of this video data are called R~, G~, and B~. Here, the sign "~" (tilde) denotes the sign attached on the previous letter, and the sign "~" (tilde) shall be hereafter used to represent the same meaning in throughout the specification. For the determination of R~, G~, and B~ at the positions x=0, 2, 4... and y=0, 2, 4... Equation 7 is used.

[Math. 7]

$$\begin{pmatrix}\tilde{R}(x,y)\\ \tilde{G}(x,y)\\ \tilde{B}(x,y)\end{pmatrix} = \tilde{A}(x,y)\begin{pmatrix}w_{1,A,R}\\ w_{1,A,G}\\ w_{1,A,B}\end{pmatrix} + \sum_{i=-\frac{n}{2}}^{\frac{n}{2}-1}\tilde{C}(x,y+0.5+2i)\begin{pmatrix}w_{1,C,R}(i)\\ w_{1,C,G}(i)\\ w_{1,C,B}(i)\end{pmatrix} + \sum_{i=-\frac{n}{2}}^{\frac{n}{2}-1}\tilde{S}(x,y+0.5+2i)\begin{pmatrix}w_{1,S,R}(i)\\ w_{1,S,G}(i)\\ w_{1,S,B}(i)\end{pmatrix} \quad \text{(Equation 7)}$$

The filter length n as well as the filter coefficients $w_{1,A,R}$, $w_{1,A,G}$, $w_{1,A,B}$, $w_{1,C,R}(i)$, $w_{1,C,G}(i)$, $w_{1,C,B}(i)$, $w_{1,S,R}(i)$, $w_{1,S,G}(i)$, and $w_{1,S,B}(i)$ are inverse transform coefficients which are estimated by the coefficient estimation unit 440. For the determination of $\tilde{R}$, $\tilde{G}$, and $\tilde{B}$ at the positions x = 0, 2, 4 and y = 1, 3, 5...

[Math. 8]

$$\begin{pmatrix}\tilde{R}(x,y)\\ \tilde{G}(x,y)\\ \tilde{B}(x,y)\end{pmatrix} = \tilde{A}(x,y)\begin{pmatrix}w_{1,A,R}\\ w_{1,A,G}\\ w_{1,A,B}\end{pmatrix} + \sum_{i=-\frac{n}{2}}^{\frac{n}{2}-1}\tilde{C}(x,y-0.5-2i)\begin{pmatrix}w_{1,C,R}(i)\\ w_{1,C,G}(i)\\ w_{1,C,B}(i)\end{pmatrix} + \sum_{i=-\frac{n}{2}}^{\frac{n}{2}-1}\tilde{S}(x,y-0.5-2i)\begin{pmatrix}w_{1,S,R}(i)\\ w_{1,S,G}(i)\\ w_{1,S,B}(i)\end{pmatrix} \quad \text{(Equation 8)}$$

For the determination of $\tilde{R}$, $\tilde{G}$, and $\tilde{B}$ at the positions x = 1, 3, 5... and y = 0, 2, 4... Equation 9 is used.

[Math. 9]

$$\begin{pmatrix}\tilde{R}(x,y)\\ \tilde{G}(x,y)\\ \tilde{B}(x,y)\end{pmatrix} = \tilde{A}(x,y)\begin{pmatrix}w_{2,A,R}\\ w_{2,A,G}\\ w_{2,A,B}\end{pmatrix} + \sum_{i=-\frac{n}{2}}^{\frac{n}{2}-1}\sum_{j=-\frac{n}{2}}^{\frac{n}{2}-1}\tilde{C}(x+1+2i,y+0.5+2j)\begin{pmatrix}w_{2,C,R}(i)\\ w_{2,C,G}(i)\\ w_{2,C,B}(i)\end{pmatrix}$$
$$+ \sum_{i=-\frac{n}{2}}^{\frac{n}{2}-1}\sum_{j=-\frac{n}{2}}^{\frac{n}{2}-1}\tilde{S}(x+1+2i,y+0.5+2j)\begin{pmatrix}w_{2,S,R}(i)\\ w_{2,S,G}(i)\\ w_{2,S,B}(i)\end{pmatrix} \quad \text{(Equation 9)}$$

The filter coefficients $w_{2,A,R}$, $w_{2,A,G}$, $w_{2,A,B}$, $w_{2,C,R}$(i, j), $W_{2,C,G}$(i, j), $w_{2,C,B}$(i, j), $w_{2,S,R}(i, j)$, $w_{2,S,G}(i, j)$, and $w_{2,S,B}(i, j)$ are inverse transform coefficients which are estimated by the coefficient estimation unit 440. For the determination of $\tilde{R}$, $\tilde{G}$, and $\tilde{B}$ at the positions x = 1, 3, 5... and y = 1, 3, 5... Equation 10 is used.

[Math. 10]

$$\begin{pmatrix}\tilde{R}(x,y)\\ \tilde{G}(x,y)\\ \tilde{B}(x,y)\end{pmatrix} = \tilde{A}(x,y)\begin{pmatrix}w_{2,A,R}\\ w_{2,A,G}\\ w_{2,A,B}\end{pmatrix} + \sum_{i=-\frac{n}{2}}^{\frac{n}{2}-1}\sum_{j=-\frac{n}{2}}^{\frac{n}{2}-1}\tilde{C}(x+1+2i, y-0.5-2j)\begin{pmatrix}w_{2,C,R}(i)\\ w_{2,C,G}(i)\\ w_{2,C,B}(i)\end{pmatrix} + \sum_{i=-\frac{n}{2}}^{\frac{n}{2}-1}\sum_{j=-\frac{n}{2}}^{\frac{n}{2}-1}\tilde{S}(x+1+2i, y-0.5-2j)\begin{pmatrix}w_{2,S,R}(i)\\ w_{2,S,G}(i)\\ w_{2,S,B}(i)\end{pmatrix} \quad \text{(Equation 10)}$$

The color components $\tilde{R}$, $\tilde{G}$, and $\tilde{B}$ are rounded to the next integer and clipped to the ranges of the original *R, G* , and *B* color components respectively.

In this example, the inverse transform coefficients are the space color transform coefficients $s_A$, $s_C$, $s_S$, $m_A$, $m_C$, and $m_S$ as well as the filter coefficients $w_{1,A,R}$, $w_{1,A,G}$, $w_{1,A,B}$, $w_{1,C,R}(i)$, $w_{1,C,G}(i)$, $w_{1,C,B}(i)$, $w_{1,S,R}(i)$, $w_{1,S,G}(i)$, and $w_{1,S,B}(i)$, $w_{2,A,R}$, $w_{2,A,G}$, $w_{2,A,B}$, $w_{2,C,R}(i, j)$, $w_{2,C,G}(i, j)$, $w_{2,C,B}(i, j)$, $w_{2,S,R}(i, j)$, $w_{2,S,G}(i, j)$, and $w_{2,S,B}(i, j)$.

The filter coefficients are estimated by minimizing the mean square error between the original color components *R, G*, and *B* and the decoded color components $\tilde{R}$, $\tilde{G}$, and $\tilde{B}$. With this criterion, all filter coefficients can be explicitly determined.

In order to reduce the data rate necessary to transmit the color format inverse transform coefficients, the coefficients are coded by the coefficient coding unit 460, for instance, by a Huffman coding, Golomb coding, exponential Golomb coding, arithmetic coding or any other variable length coding approach, and output from the channel 140 as the coded color format inverse transform coefficient 461. Moreover, the data can be protected by a checksum or by a forward error correction code, if necessary.

After having been sent over the channel 140, the coded data 401 and the coded color format inverse transform coefficients 402 are received by the image decoding apparatus 20. The image decoding apparatus 20 illustrated in FIG. 4B includes a decoder 470 and a color format inverse transform unit 480, and a coefficient decoding unit 490.

The coded color format inverse transform coefficients 402 are decoded by the coefficient decoding unit 490, and the color format inverse transform coefficients 491 are provided to the color format inverse transform unit 480. The received coded data 401 is decoded by an H.264/AVC decoder 470, and the decoded image data 471 is provided to the color format inverse transform unit 480. The color format inverse transform is then performed using the receiver color format inverse transform coefficients 491 as described above. In this example, the upsampling and the color space inverse transform are performed in one color format inverse transform step. However, the upsampling and the color space inverse transform may also be performed separately. Moreover, it is also possible to only perform one of the upsampling or the color space inverse transform. In these cases separate coefficients for the color space inverse transform and for the upsampling may be necessary. The image data 481 represented as the rounded and clipped color components $\tilde{R}$, $\tilde{G}$, and $\tilde{B}$ 481 are then sent to the display 170.

FIGS. 6A and 6B illustrate block diagrams of a transmission chain comprising color format transform and inverse transform in accordance with another embodiment of the present invention. Here, FIG. 6A illustrates the image coding apparatus 10 on the transmission side, and FIG. 6B illustrates the image decoding apparatus 20 on the reception side. Furthermore, FIGS. 7A and 7B are flowcharts illustrating the operations of the image coding apparatus 10 in FIG. 6A and the operations of the image decoding apparatus 20 in FIG. 6B, respectively.

The image coding apparatus 10 illustrated in FIG. 6A includes a color format transform unit 600, an encoder 130, a decoder 450, a color space estimation unit 630, an interpolation filter coefficient estimation unit 640, a color space inverse transform estimation unit 650, an upsampling and interpolation unit 660, and a side information coding unit 670. Furthermore, the color format transform unit 600 includes a color space transform unit 610 and a filtering and subsampling unit 620.

The color space estimation unit 630 determines the color space transform coefficient based on the characteristics of the original image (color image) 111 obtained from the camera 110. The color space transform unit 610 generates the color space transformed color image by transforming the color space of the original image data 111 from the first color space to a second color space which is different from the first color space, based on the color space transform coefficient determined by the color space estimation unit 630. The filtering and subsampling unit 620 generates subsampled color image by removing a part of the samples included in the color space transformed color image.

The encoder 130 codes the sampled color image to generate a coded color image. The decoder 450 decodes the coded color image to generate a decoded color image. The upsampling and interpolation unit 660 generates the interpolated color image by interpolating the samples of the decoded color image.

The interpolation filter coefficient estimation unit 640 determines the upsampling coefficient used for upsampling to interpolate the samples. More specifically, the upsampling coefficient is determined such that the mean square error between the decoded color image and the color space transformed color image are minimized.

The color space inverse transform estimation unit 650 determines the color space inverse transform coefficient for inversely transforming the color space from the second color space to the first color space. More specifically, the color space of the interpolated color image is inversely transformed from the second color space to the first color space, and the color space inverse transformed color image is generated. Subsequently, the color space inverse transform coefficient is determined such that the mean square error between the color space inverse transformed color image and the color image.

The side information coding unit 670 codes side information including the upsampling coefficient, the color space inverse transform coefficient, and the color space transform coefficient to generate coded side information. Subsequently, the image coding apparatus 10 outputs the coded color image and the coded side information to the channel 140.

In this case, a separate estimation of inverse transform coefficients is performed for the color space inverse transform and for interpolation filtering. Correspondingly, at the side of inverse transform, the upsampling and interpolation filtering is performed separately from the inverse color transform. The operations of the image coding apparatus 10 are described with reference to FIGS. 6A and 7A.

Similarly to the processing illustrated in FIGS. 4A and 4B, the camera 110 provides RGB 4:4:4 original image data 111 (S11). This original image data 111 is used for the color space estimation by the color space estimation unit 630, where the transform matrix $T_{KLT}$ is determined. The estimated transform is then performed and color space of the input original image data 111 is transformed into data 611 in adaptive color space corresponding to the determined transform by the color space tranform unit 610 (S12). The color space transformed image data 611 in ACS 4:4:4 color format are further filtered and subsampled by the filtering and subsampling unit 620, resulting in image data 621 in ACS 4:2:0 color format (S13). The image data 621 in ACS 4:2:0 color format is coded by the H.264/AVC encoder 130 (S14), and the coded data 622 is provided to the decoder 450 (S15).

After decoding, the obtained data are used by the interpolation filter coefficient estimation unit 640 (S16). One possibility is to estimate the interpolation filter as a Wiener filter. Hereby, the filter coefficients are estimated by minimizing the mean square error between the decoded image data in the ACS 4:2:0 color format after upsampling and interpolation and the image data 611 in the ACS 4:4:4 color format. Other estimation criteria are also possible. For example, the Lagragian costs of data rate and mean square error can be minimized. The image data are upsampled and interpolated using the estimated filter coefficients estimated by the upsampling and interpolation unit 660. Moreover, the upsampled image data is provided for the estimation of the color space inverse transform by the color space inverse transform estimation unit 650 (S17). The color space inverse transform estimation unit 650 uses the decoded image data in the ACS 4:4:4 color format and the original image data 111 in the RGB 4:4:4 color format for the estimation as well as the color space transform parameters previously determined by the color space estimation unit 630. Hereby, the inverse color transform coefficients may be estimated by minimizing the mean square error between the decoded image data in the RGB 4:4:4 color format and the original image data in the RGB 4:4:4 color format. The interpolation filter coefficient and the color space inverse transform coefficients are then also coded by the side information coding unit 670 (S18), and transmitted as coded side information 671 with the coded data 622 (S19).

The image decoding apparatus 20 on the reception side includes a decoder 470, a side information decoding unit 675, an upsampling and interpolation unit 680, and a color space inverse transform unit 690. The image decoding apparatus 20 receives the coded color image and coded side information through the channel 140. The decoder 470 decodes the coded color image to generate a decoded color image. The side information decoding unit 675 decodes the coded side information to generate decoded side information.

The upsampling and interpolation unit 680 generates an interpolated color image by interpolating the sample of the decoded color image using the upsampling coefficient. The color space inverse transform unit 690 generates a color image by inversely transforming, using the color space inverse transform coefficients, the color space of the interpolated color image from the second color space to the first color space.

The operations of the image decoding apparatus 20 are described with reference to FIGS. 6B and 7B. First, the coded data 601 and the coded side information 602 are obtained through the channel 140 (S21). The coded data 601 is decoded in the decoder 470 and the image data 603 is generated (S22). On the other hand, the coded side information 602 is decoded in the side information decoding unit 675, and the interpolation filter coefficient 604 and the color space inverse transform coefficient 605 are generated (S23). The interpolation filter coefficient 604 is provided to the upsampling and interpolation unit 680 with the image data 603 generated by decoding the coded data 601 in the decoder 470. Interpolation filtering on the image data 603 is performed using the interpolation filter coefficient 604 (S24). The outcome is the image data in the ACS 4:4:4 color space, that are further inversely transformed by the color space inverse transform unit 690 using the color space inverse transform coefficients 605 (S25). The generated image is displayed on the display 170 (S26).

Another example illustrating structure of the color format transform unit and inverse transform unit according to the present invention is shown in FIGS. 8A and 8B. Here, FIG. 8A illustrates the image coding apparatus 10 on the transmission side, and FIG. 8B illustrates the image decoding apparatus 20 on the reception side.

In this example, color space transform is performed by a standard color space transform unit 710, instead of the adaptive color space transform. The color space transform performed by the color space transform unit 710 here is a transform from the RGB 4:4:4 color format to the YUV 4:4:4 color format. However, any other color space may be used as well.

The image coding apparatus 10 shown in FIG. 8A includes an encoder 130, a decoder 450, a color space transform unit 710, a filtering and subsampling unit 720, an interpolation filter coefficient estimation unit 730, and a side information coding unit 740.

The original image data 111, provided by the camera 110, is transformed by the color space transform unit 710, in this case a transform into the YUV 4:4:4 color format. Resulting image data 711 is further filtered and subsampled by the filtering and subsampling unit 720, resulting in the image data 721 in YUV 4:2:0 format, which is then coded by the H.264/AVC encoder 130. The coded data 722 is further decoded by the decoder 450 and used for the estimation of interpolation filter coefficients in the interpolation filter coefficient estimation unit 730, which may be performed similarly to the previous example, namely by Wiener filter estimation, estimating the coefficients by minimizing the mean square error between the original image data 711 and the decoded image data. Furthermore, other linear and non-linear estimation methods can be used as well. It is also possible to optimize the interpolation filter coefficients and the inverse color transform coefficients in other color spaces than RGB, for instance, YUV, if necessary.

The estimated interpolation filter coefficients 731 is further coded by the side information coding unit 740 and transmitted together with the coded video data 722 as the coded side information 741.

The image decoding apparatus 20 on the reception side includes, as shown in FIG. 8B, a decoder 470, an upsampling and interpolation unit 750, a side information decoding unit 760, and a color space inverse transform unit 770. The coded data 701 is decoded by the H.264/AVC decoder 470, and the image data 703 is generated. The coded side information 702 received together with the coded data 701 is decoded by the side information decoding unit 760, and the interpolation filter coefficient 704 is generated. Subsequently, the upsampling and interpolation unit 750 performs upsampling and interpolation filtering using the image data 703 and the interpolation filter coefficient 704. After upsampling, the YUV 4:4:4 image data 751 is transformed to the RGB 4:4:4 color space using a standard color space inverse transform unit 770. The RGB 4:4:4 data 771 is then displayed on the display 170.

FIG. 9 shows another embodiment according to the present invention. Here, the color format transform unit 310 and the determining unit 320 are components of the image coding apparatus 10, which further comprises an image compression unit 830. For instance, the color format transform in accordance with the present invention may be included as an optional or mandatory feature within an image or video standard, such as the H.264/AVC, DIRAC, JPEG2000 or their followers. It may also be a part of a proprietary video encoder. The color format inverse transform parameters 321 can then be provided as a part of the coded video stream which comprises the compressed video, information elements necessary for its decoding and the color space inverse transform parameters. The color format inverse transform coefficient 321 may be sent either within the packets comprising the video data information or in separate packets as side information. Hereby, the color format inverse transform parameters may be coded further using an entropy code, such as Golomb, exponential Golomb, arithmetic, Huffman, or any other entropy code. The entropy code employed may correspond to the entropy code used for coding the video data and/or information elements related to the video data. It may also be an entropy code designed specially for the color space inverse transform parameters and adapted on their statistics.

Correspondingly, the color format inverse transform unit 330 and an image decompression unit 850 are parts of the image decoding apparatus 20. The color format inverse transform coefficients 322 are obtained together with the image/video data from the channel 140, corresponding to the above described image coding apparatuses 10 either as a part of video stream or as a separate side information. They are further entropy decoded and provided to the color format inverse transform unit 330 together with the image data 312 obtained from the channel 140 and decompressed by the image decompression unit 850. The decompression can be performed in accordance with the standardized or proprietary video or image decoders or their followers. In particular, the decoder can be H.264/AVC, DIRAC, JPEG2000.

Here, the color format transform and inverse transform may work in accordance with any of the previously described examples, and it may comprise color space transform and/or interpolation filtering estimation.

In accordance with another embodiment of the present invention and according to FIG. 9, the color format inverse transform coefficients 321 are transmitted over the channel 140 and, in addition, provided to the image data compression unit 830. Similarly, at the image decoding apparatus 20 on the reception side, the color format inverse transform coefficients 322 obtained from the channel 140 are provided to the color format inverse transform unit 330 and, in addition, to the image decompression unit 850. This feature, namely providing the color format inverse transform coefficients 321 to the image coding apparatus 10 and/or to the decoding apparatus 20, may obviously be applied to any of the previous examples illustrated in FIGS. 3, 4A, 4B, 6A, 6B, 8A, and 8B and to any other embodiments of the present invention. Providing the color format inverse transform coefficients 321 to the image compression unit 830 is particularly advantageous if the compression 830 employs temporal prediction. For instance, if the color space changes within the same group of pictures in such a manner that a predicted frame has a color space different from the color space of its reference frame, it is necessary to perform a color space transform and inverse transform at the image coding apparatus in order to facilitate the prediction. In order to do that, the color format inverse transform coefficients 321 are necessary.

Similarly, on the image decoding apparatus 20 side, in order to decode a video stream coded using temporal prediction and changing color format within a group of pictures, the color format inverse transform coefficient 322 have to be provided to the image decompression unit 850 as well.

The above-described configurations can be applied to different parts of image or video data. For instance, the color format inverse transform coefficients may be determined for a portion of image or video, which may be a macroblock, a group of macroblocks, a slice, a field, a picture, a group of pictures, etc. The smaller the portion for which the coefficients are determined, the better adapted are the transform and inverse transform on the input image and on each other. However, transmitting the color format coefficients requires rate increasing and thus, possibly, an optimum can be found for the size of the video portion for which the coefficients remain unchanged. The optimum may also depend on the application and on the coding settings. The portion for which the coefficients are determined can be fixed or variable. For instance, the color format inverse transform coefficients may be sent if necessary, i.e. after a change of the image/video content that would benefit from a different color space and/or interpolation.

Determining and/or providing of the color format inverse transform coefficients does not necessarily need to be with the same frequency for the color space coefficients and for the interpolation filter coefficients. In situations in which the color space remains the same over a portion of a video, e.g. for a group of pictures, it may be still beneficial to transmit parameters for the interpolation and upsampling for smaller portions.

In the case of predictive video coding (e.g. as used in H.264/AVC), the reference pictures used for the prediction of the current picture may be transformed in the same color space as the current picture for the prediction purpose.

In the case of a coding scheme using an H.264/AVC encoder and decoder, the color format transform coefficients may be transmitted using a so-called SEI (Supplemental Enhancement Information) message of the H.264/AVC standard.

In the case that the sampling grid of the camera on the CCD/CMOS is not a regular 4:4:4 sampling grid, e.g. a sampling grid according to a Bayer Pattern, the RGB samples at these positions could also be used for the estimation of the color format transform coefficients. Information about the original sampling grid of the RGB signal in the camera can be also coded and transmitted to the receiver. Hereby, it is possible to code and transmit an indicator which indicates one sampling grid out of several predefined sampling grids. It is also possible to code and transmit the full information about the sampling grid. This is useful in situations in which the sampling grid is not predefined.

Moreover, while a color space transform may be performed from a first color space to a second color space, the color format inverse transform coefficients are determined for a color space inverse transform from the second color space to a first color space. This may be of advantage if a display uses a different color space than that of the color format transform input data.

The examples described above describe transmitting and receiving of the image or video data. However, in all these examples, storing and retrieving may equally be referred to. In such case, the channel 140 is a storage medium, such as hard disk, optical or magnetic media, flash memories such as USB sticks, etc.

(Other Variation)

Although the present invention has been described with reference to the embodiments, the present invention is certainly not limited to the embodiments. The following cases are included in the present invention as well.

Specifically, each of the apparatuses is a computer including a microprocessor, a ROM, a RAM, a hard disk unit, a display unit, a keyboard, and others. A computer program is stored in the RAM and the hard disk unit. The respective apparatuses achieve their functions through the microprocessor's operation according to the computer program. Here, the computer program is configured by combining plural instruction codes indicating instructions for the computer.

A part or all of the constituent elements constituting the respective apparatuses may be configured from a single System-LSI (Large-Scale Integration). The System-LSI is a super-multi-function LSI manufactured by integrating constituent units on one chip, and is specifically a computer system configured by including a microprocessor, a ROM, a RAM, and so on. A computer program is stored in the RAM. The system LSI achieves their functions through the microprocessor's operation according to the computer program.

Each unit of the constituent elements configuring the respective apparatuses may be made as separate individual chips or as a single chip to include a part or all thereof. The IC card and the module is a computer system including a microprocessor, a ROM, a RAM and others. The IC card or the module may include an ultra multi function LSI. The IC card or the module achieves their functions through the microprocessor's operation according to the computer program. The IC card or the module may also be implemented to be tamper-resistant.

The present invention may be the above-described method. The present invention may be a computer program for realizing the previously illustrated method, using a computer, and may also be a digital signal including the computer program.

Furthermore, the present invention may also be realized by storing the computer program or the digital signal in a computer readable recording medium such as flexible disk, a hard disk, a CD-ROM, an MO, a DVD, a DVD-ROM, a DVD-RAM, a BD (Blu-ray Disc), and a semiconductor memory. Furthermore, the present invention may also include the digital signal recorded in these recording media.

Furthermore, the present invention may also be realized by the transmission of the aforementioned computer program or digital signal via a telecommunication line, a wireless or wired communication line, a network represented by the Internet, a data broadcast and so on.

The present invention may also be a computer system including a microprocessor and a memory, in which the memory stores the aforementioned computer program and the microprocessor operates according to the computer program.

Furthermore, by transferring the program or the digital signal by recording onto the aforementioned recording media, or by transferring the program or digital signal via the aforementioned network and the like, execution using another independent computer system is also made possible.

The embodiments and the variations may be combined as well.

Although only some exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention.

[Industrial Applicability]

The present invention is effectively used for an image coding method (apparatus) and an image decoding method (apparatus).

[Reference Signs List]

10 Image coding apparatus
20 Image decoding apparatus
110 Camera
111 Original image data
120, 410, 610, 710 Color space transform unit
121, 151, 161, 211, 221, 311, 312, 331, 411, 421, 451, 471, 481, 603, 611, 621, 711, 721, 703, 751 Image data
130 Encoder
131, 401, 601, 622, 701, 722 Coded data
140 Channel
150, 450, 470 Decoder
160, 690, 770 Color space inverse transform unit
170 Display
201, 310, 400, 600 Color format transform unit
202, 330, 480 Color format inverse transform unit
210, 420, 620, 720 Filtering and subsampling unit
220, 660, 680, 750 Upsampling and interpolation unit
320 Determining unit
321, 322, 491 Color format inverse transform coefficient
402, 61 Coded color format inverse transform coefficient
430, 630 Color space estimation unit
440 Coefficient estimation unit
460 Coefficient coding unit
490 Coefficient decoding unit
602, 671, 701, 741 Coded side information
604, 704, 731 Interpolation filter coefficient

605 Color space inverse transform coefficient
640, 730 Interpolation filter coefficient estimation unit
650 Color space inverse transform estimation unit
670, 740 Side information coding unit
675, 760 Side information decoding unit
830 Image compression unit
850 Image decompression unit

## Claims

**1.** An image coding method for coding a color image, comprising:

transforming a color space of the color image from a first color space to a second color space which is different from the first color space to generate a color space transformed color image;
removing part of samples included in the color space transformed color image to generate a subsampled color image;
coding the subsampled color image to generate a coded color image;
determining an upsampling coefficient used for upsampling in which samples are interpolated;
determining a color space inverse transform coefficient for inversely transforming the color space from the second color space to the first color space; and
outputting the coded color image, the upsampling coefficient, and the color space inverse transform coefficient.

**2.** The image coding method according to Claim 1, further comprising:

decoding the coded color image to generate a decoded color image; and
interpolating samples in the decoded color image to generate an interpolated color image,
wherein, in said determining of an upsampling coefficient, the upsampling coefficient is determined so as to minimize a mean square error between the decoded color image and the color space transformed color image.

**3.** The image coding method according to Claim 2, further comprising
inversely transforming a color space of the interpolated color image from the second color space to the first color space to generate a color space inverse transformed color image,
wherein, in said determining of a color space inverse transform coefficient, the color space inverse transform coefficient is determined so as to minimize a mean square error between the color space inverse transformed color image and the color image.

**4.** The image coding method according to Claim 1, further comprising
determining the color space transform coefficient based on a characteristic of the color image,
wherein, in said transforming, the color space of the color image is transformed from the first color space to the second color space based on the color space transform coefficient determined in said determining of a color space transform coefficient, and
in said outputting, the color space transform coefficient is further outputted.

**5.** The image coding method according to Claim 4, further comprising
coding side information including the upsampling coefficient, the color space inverse transform coefficient, and the color space transform coefficient to generate coded side information,
wherein, in said outputting, the coded color image and the coded side information are outputted.

**6.** An image decoding method for decoding a color image, comprising:

obtaining a coded color image, an upsampling coefficient, and a color space inverse transform coefficient;
decoding the coded color image to generate a decoded color image;
interpolating, using the upsampling coefficient, samples in the decoded color image to generate an interpolated color image; and
inversely transforming, using the color space inverse transform coefficient, a color space of the interpolated color image from the second color space to the first color space to generate a color space inverse transformed color image.

**7.** An image coding apparatus for coding a color image, comprising:

a color space transform unit configured to transform a color space of the color image from a first color space to a second color space which is different from the first color space to generate a color space transformed color image;
a subsampling unit configured to remove part of samples included in the color space transformed color image to generate a subsampled color image;
a coding unit configured to code the subsampled color image to generate a coded color image;
an upsampling coefficient determining unit configured to determine an upsampling coefficient used for upsampling in which samples are interpolated;
a color space inverse transform coefficient determining unit configured to determine a color space inverse transform coefficient for inversely transforming the color space from the second color space to the first color space; and
an outputting unit configured to output the coded color image, the upsampling coefficient, and the color space inverse transform coefficient.

**8.** An image decoding apparatus for decoding a color image, comprising:

an obtaining unit configured to obtain a coded color image, an upsampling coefficient, and a color space inverse transform coefficient;
a decoding unit configured to decode the coded color image to generate a decoded color image;
an upsampling unit configured to interpolate, using the upsampling coefficient, samples in the decoded color image to generate an interpolated color image; and
a color space inverse transform unit configured to inversely transform, using the color space inverse transform coefficient, a color space of the interpolated color image from the second color space to the first color space to generate a color space inverse transformed color image.

**9.** A program which causes a computer to code a color image, said program causing the computer to execute:

transforming a color space of the color image from a first color space to a second color space which is different from the first color space to generate a color space transformed color image;
removing part of samples included in the color space transformed color image to generate a subsampled color image;
coding the subsampled color image to generate a coded color image;
determining an upsampling coefficient used for upsampling in which samples are interpolated;
determining a color space inverse transform coefficient for inversely transforming the color space from the second color space to the first color space; and
outputting the coded color image, the upsampling coefficient, and the color space inverse transform coefficient.

**10.** A program which causes a computer to decode a color image, said program causing the computer to execute:

obtaining a coded color image, an upsampling coefficient, and a color space inverse transform coefficient;
decoding the coded color image to generate a decoded color image;
interpolating, using the upsampling coefficient, samples in the decoded color image to generate an interpolated color image; and
inversely transforming, using the color space inverse transform coefficient, a color space of the interpolated color image from the second color space to the first color space to generate a color space inverse transformed color image.

**11.** An integrated circuit for coding a color image, comprising:

a color space transform unit configured to transform a color space of the color image from a first color space to a second color space which is different from the first color space to generate a color space transformed color image;
a subsampling unit configured to remove part of samples included in the color space transformed color image to generate a subsampled color image;
a coding unit configured to code the subsampled color image to generate a coded color image;
an upsampling coefficient determining unit configured to determine an upsampling coefficient used for upsampling in which samples are interpolated;

a color space inverse transform coefficient determining unit configured to determine a color space inverse transform coefficient for inversely transforming the color space from the second color space to the first color space; and

an outputting unit configured to output the coded color image, the upsampling coefficient, and the color space inverse transform coefficient.

**12.** An integrated circuit for decoding a color image, comprising:

an obtaining unit configured to obtain a coded color image, an upsampling coefficient, and a color space inverse transform coefficient;

a decoding unit configured to decode the coded color image to generate a decoded color image;

an upsampling unit configured to interpolate, using the upsampling coefficient, samples in the decoded color image to generate an interpolated color image; and

a color space inverse transform unit configured to inversely transform, using the color space inverse transform coefficient, a color space of the interpolated color image from the second color space to the first color space to generate a color space inverse transformed color image.

FIG. 1

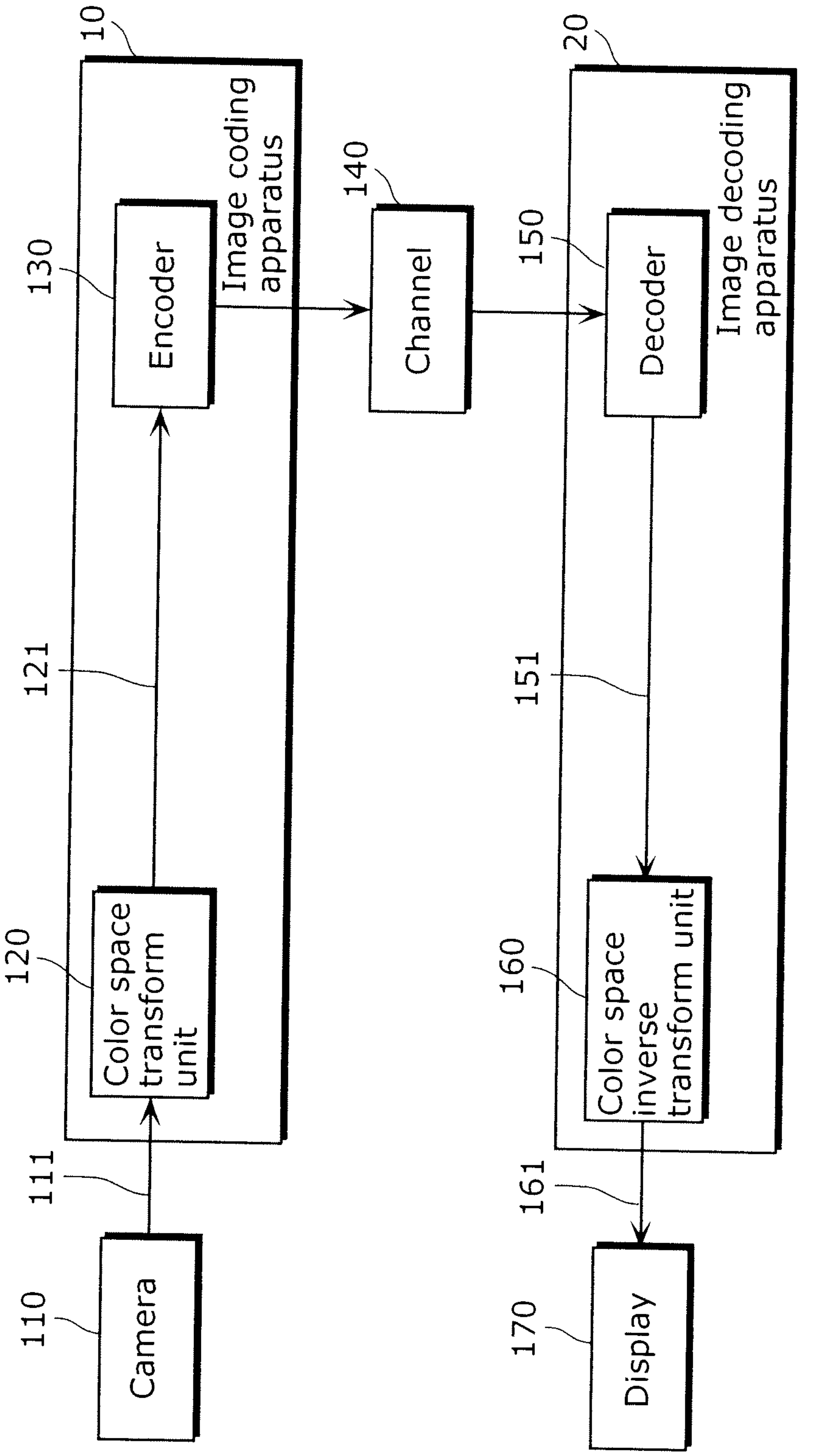

10
Image coding apparatus
110
Camera
111
120
Color space transform unit
121
130
Encoder
140
Channel
20
Image decoding apparatus
150
Decoder
151
160
Color space inverse transform unit
161
170
Display

FIG. 2

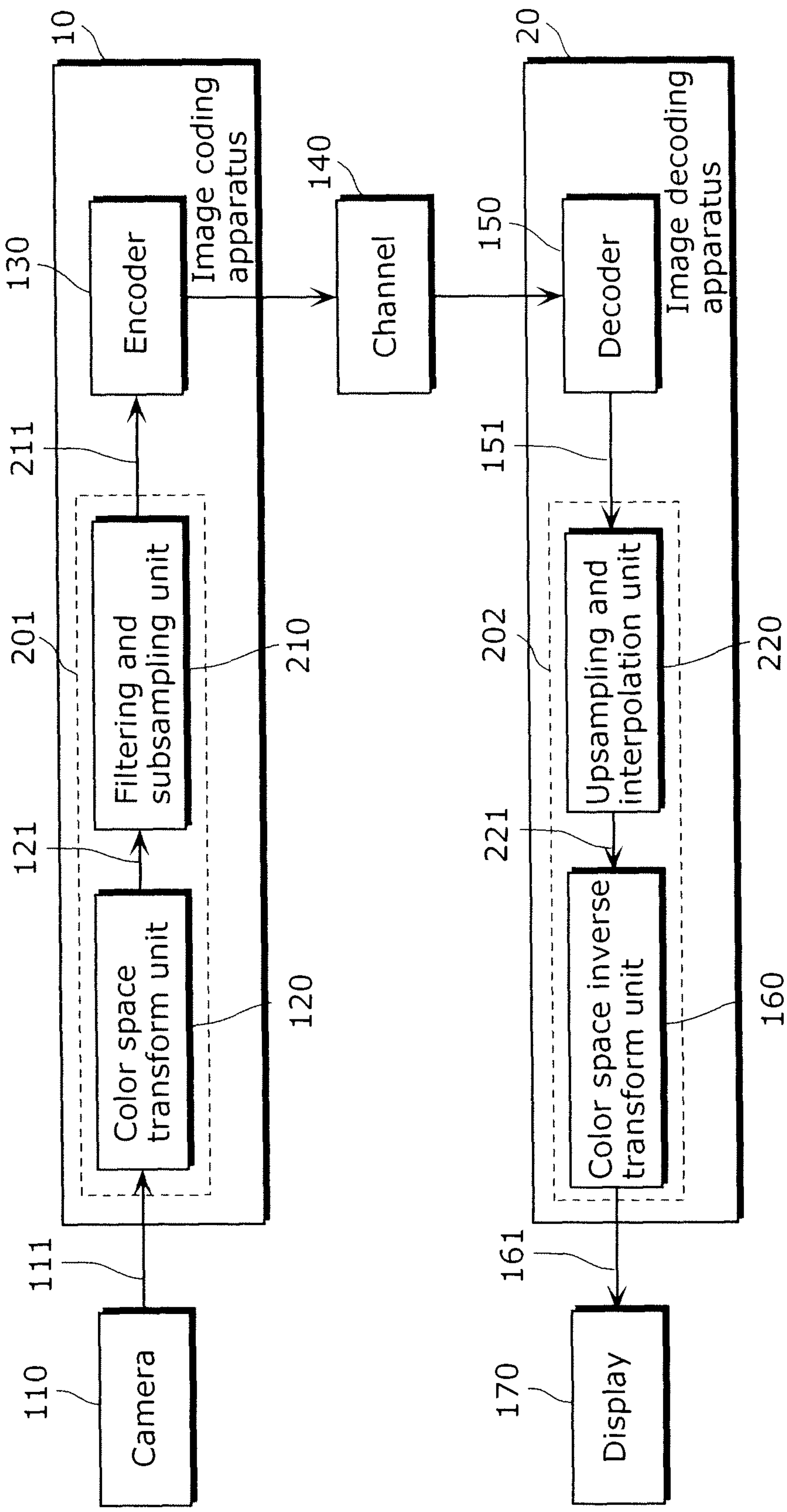
10
Image coding apparatus
130
Encoder
211
201
Filtering and subsampling unit
210
121
Color space transform unit
120
111
110
Camera
140
Channel
20
Image decoding apparatus
150
Decoder
151
202
Upsampling and interpolation unit
220
221
Color space inverse transform unit
160
161
170
Display

FIG. 3

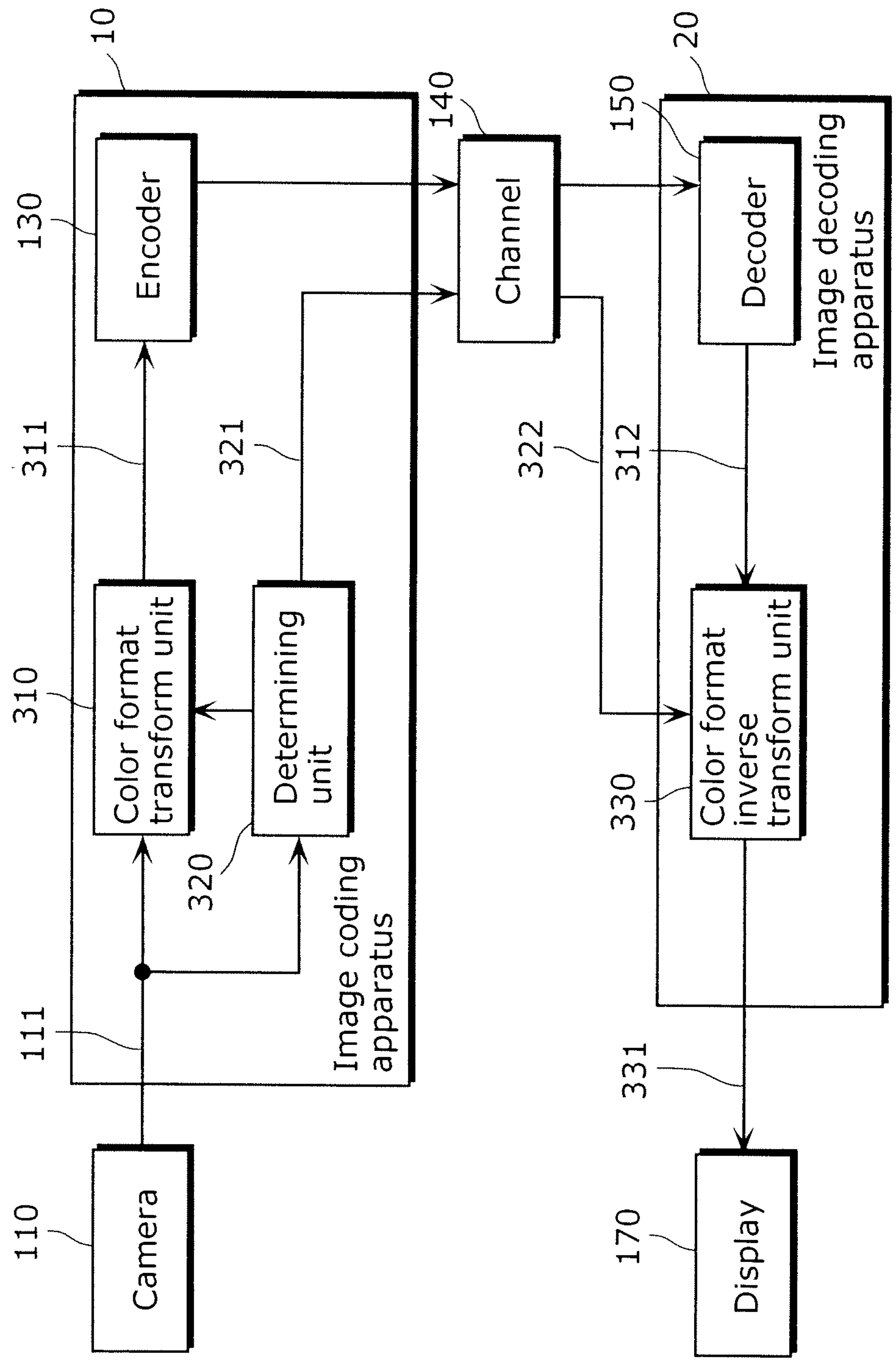

Camera
Image coding apparatus
Color format transform unit
Determining unit
Encoder
Channel
Decoder
Image decoding apparatus
Color format inverse transform unit
Display
10
20
110
111
130
140
150
170
310
311
312
320
321
322
330
331

FIG. 4A

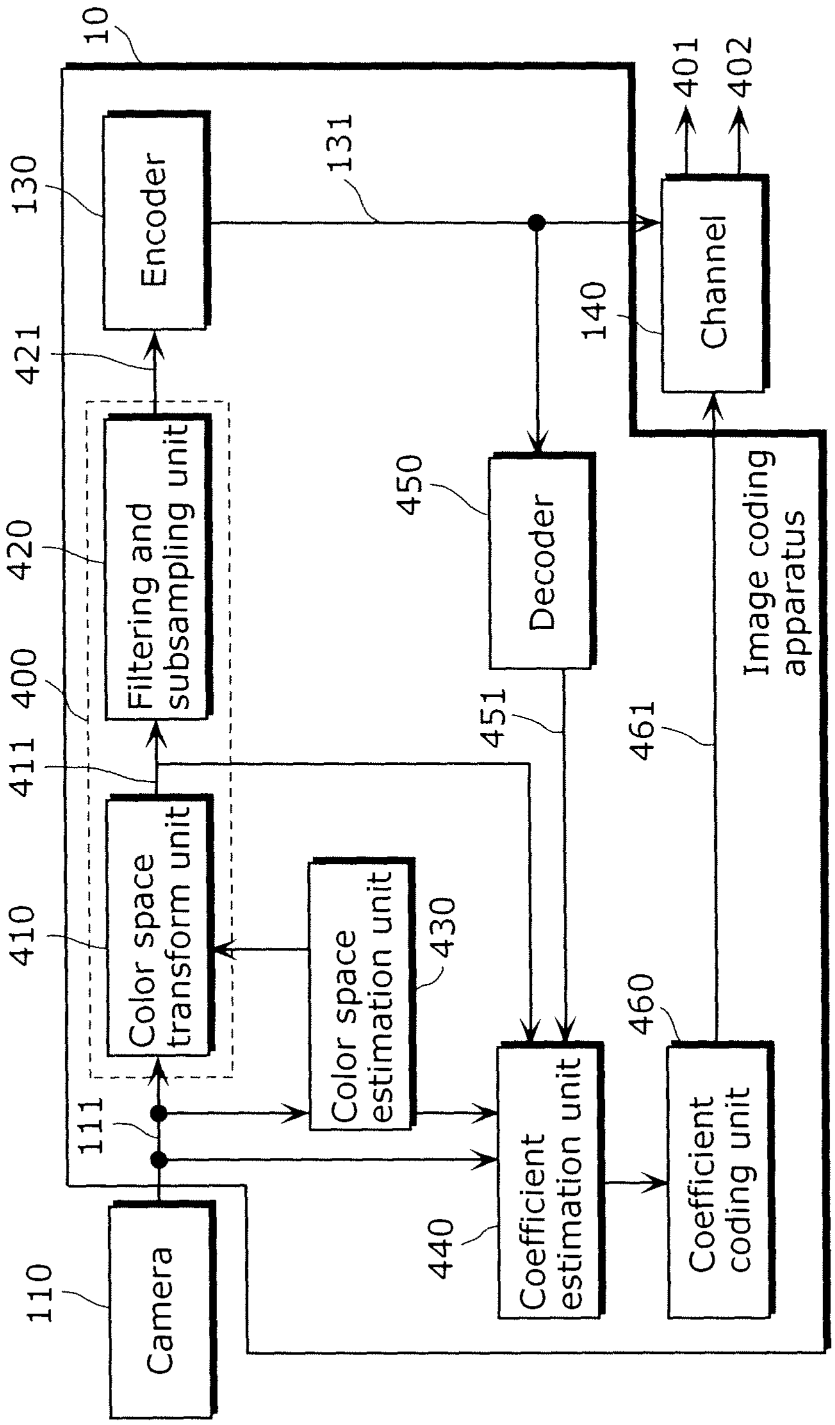
10
Encoder
130
131
401
402
421
Filtering and subsampling unit
420
400
411
Color space transform unit
410
Color space estimation unit
430
111
Camera
110
Channel
140
Decoder
450
451
Image coding apparatus
461
Coefficient estimation unit
440
Coefficient coding unit
460

FIG. 4B

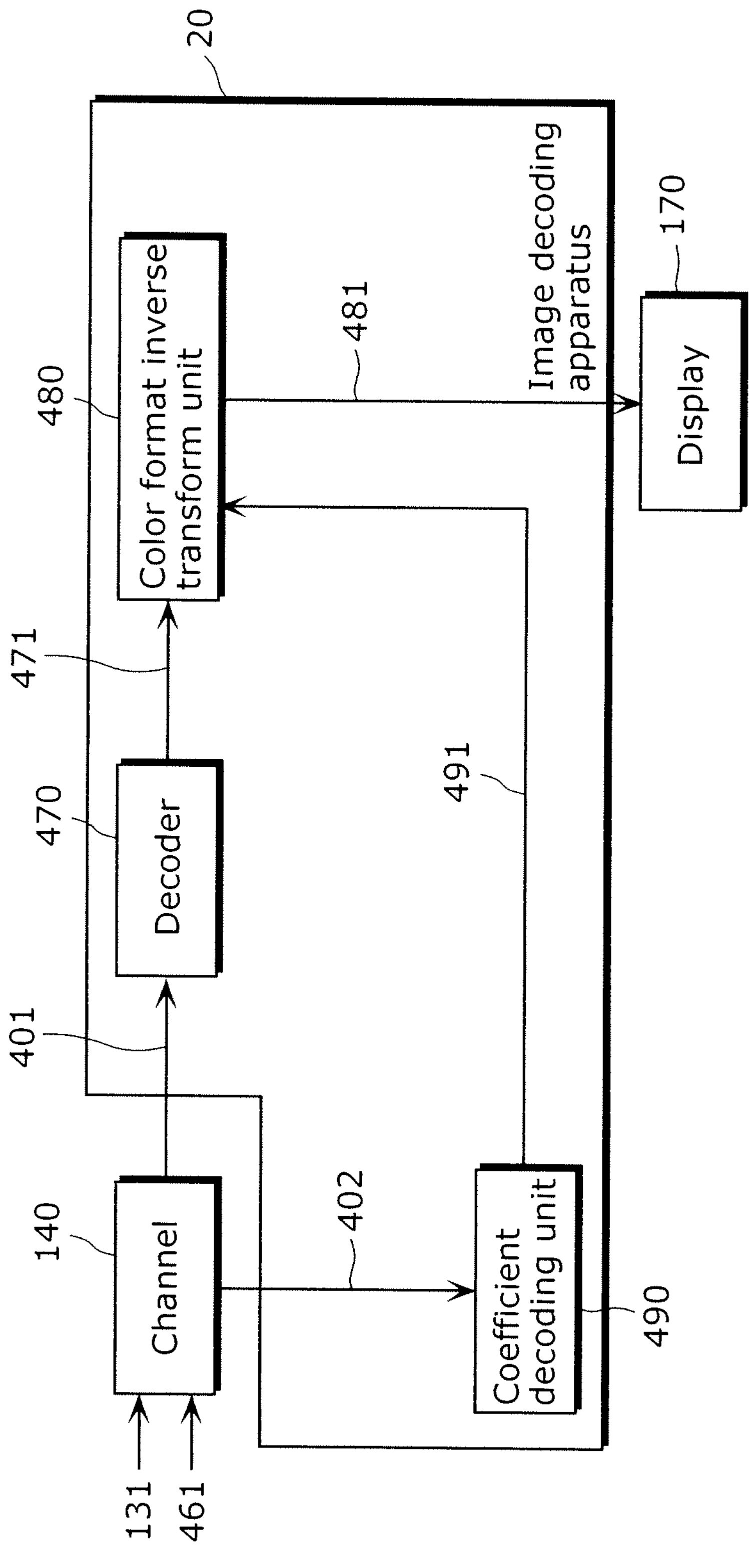
20
Image decoding apparatus
Color format inverse transform unit
480
481
471
Decoder
470
491
401
Channel
140
402
Coefficient decoding unit
490
131
461
Display
170

FIG. 5

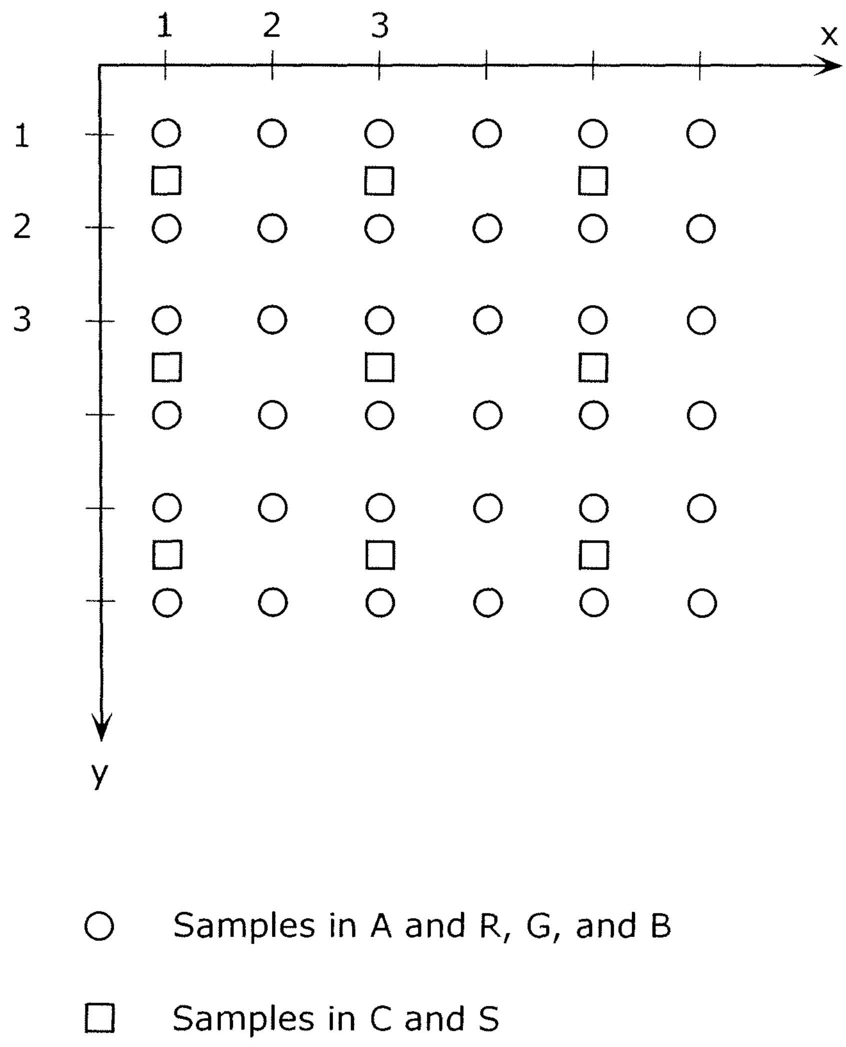

FIG. 6A

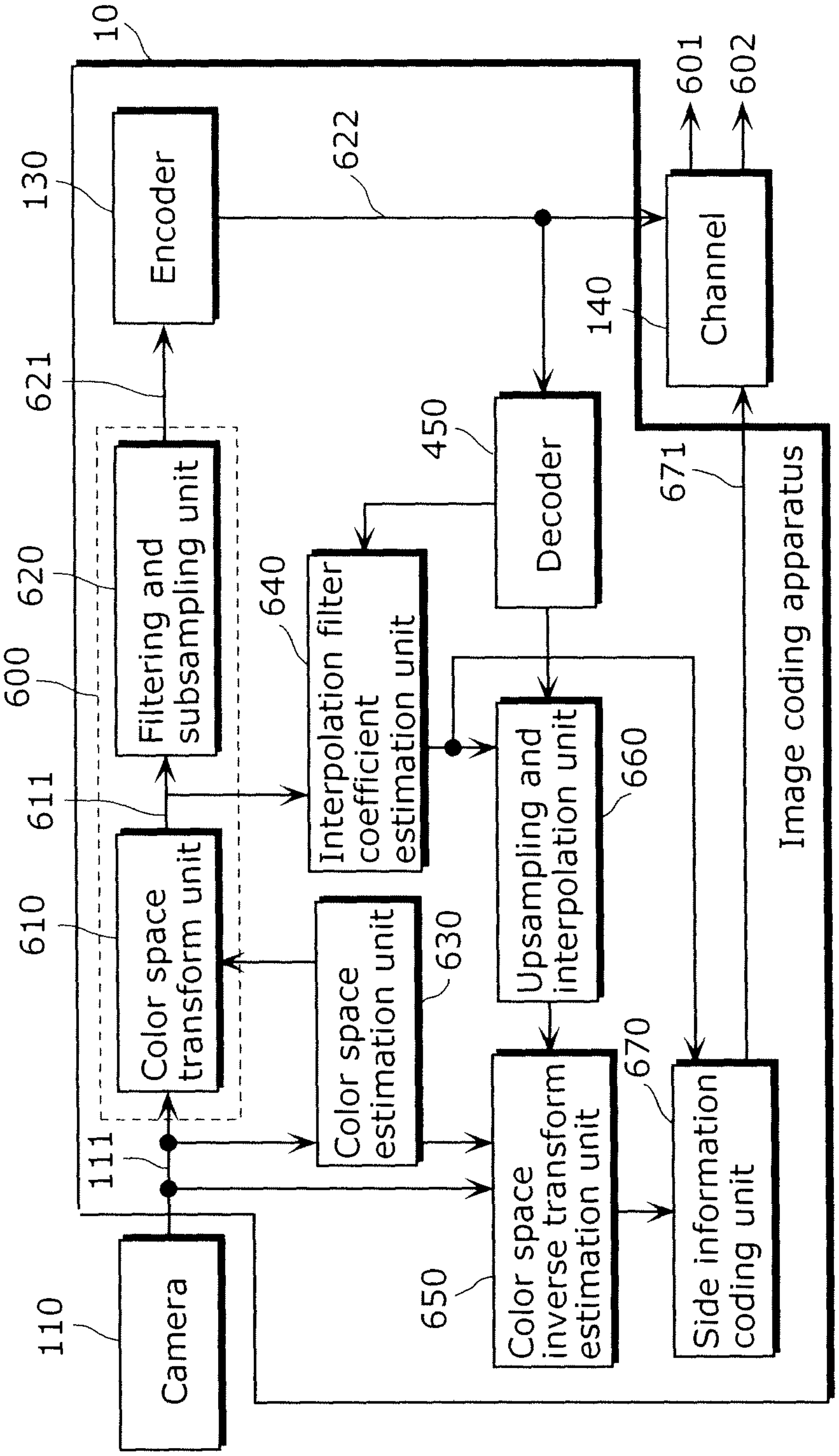
10
130
Encoder
622
601
602
621
Channel
140
450
Decoder
671
620
Filtering and subsampling unit
640
Interpolation filter coefficient estimation unit
600
611
Image coding apparatus
660
Upsampling and interpolation unit
610
Color space transform unit
630
Color space estimation unit
670
111
Color space inverse transform estimation unit
Side information coding unit
650
110
Camera

FIG. 6B

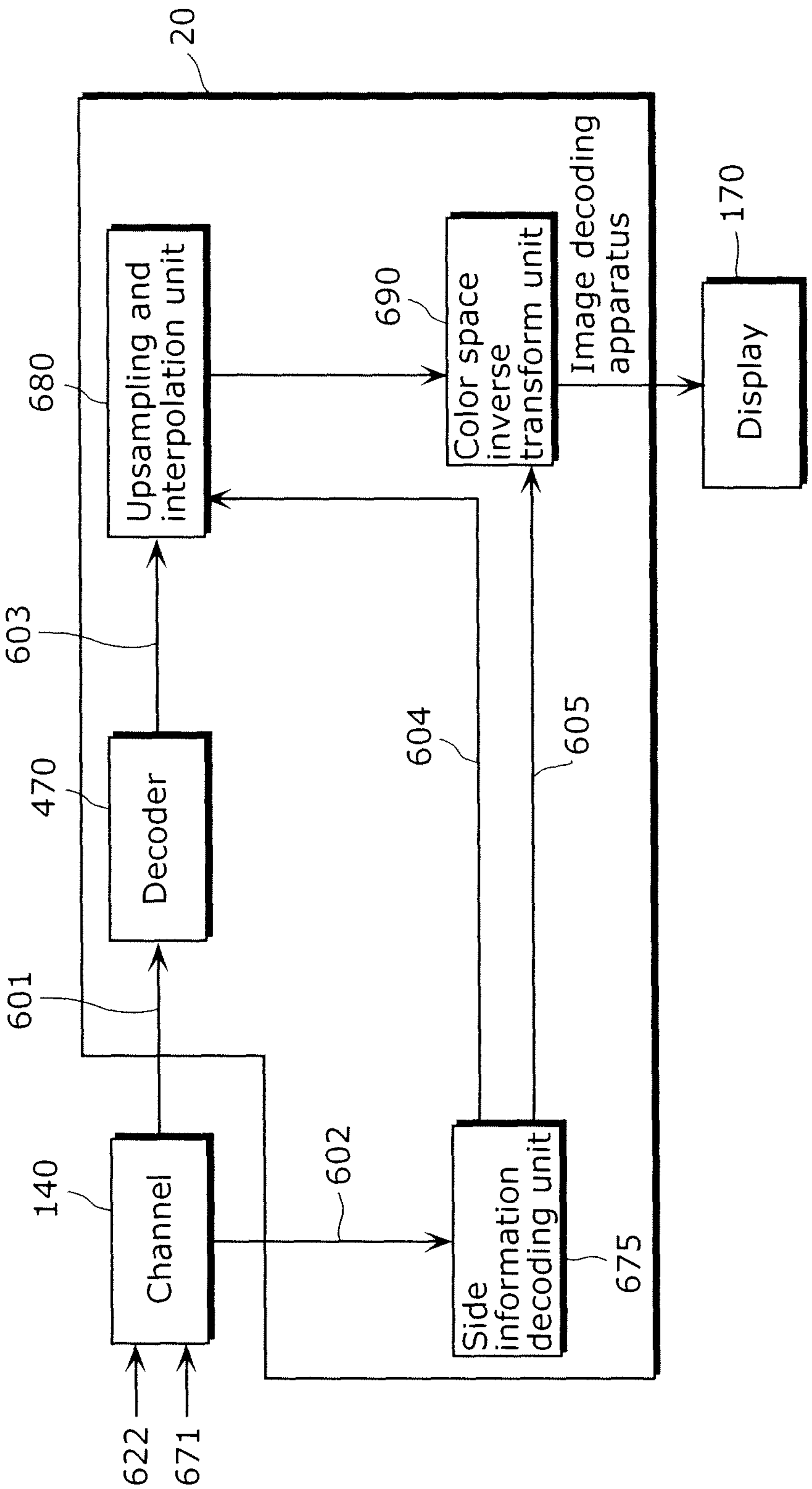
20
Upsampling and interpolation unit
680
Color space inverse transform unit
690
Image decoding apparatus
170
Display
603
Decoder
470
604
605
601
Channel
140
602
Side information decoding unit
675
622
671

FIG. 7A

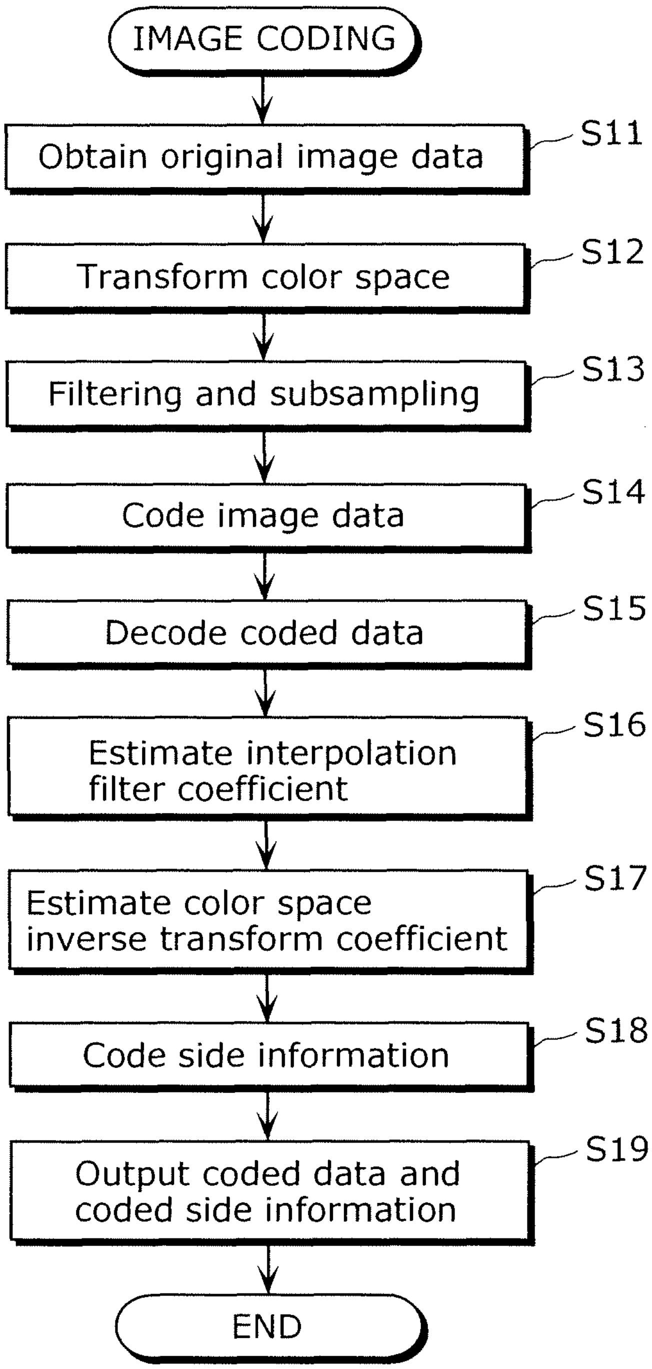
IMAGE CODING
Obtain original image data
S11
Transform color space
S12
Filtering and subsampling
S13
Code image data
S14
Decode coded data
S15
Estimate interpolation filter coefficient
S16
Estimate color space inverse transform coefficient
S17
Code side information
S18
Output coded data and coded side information
S19
END

FIG. 7B

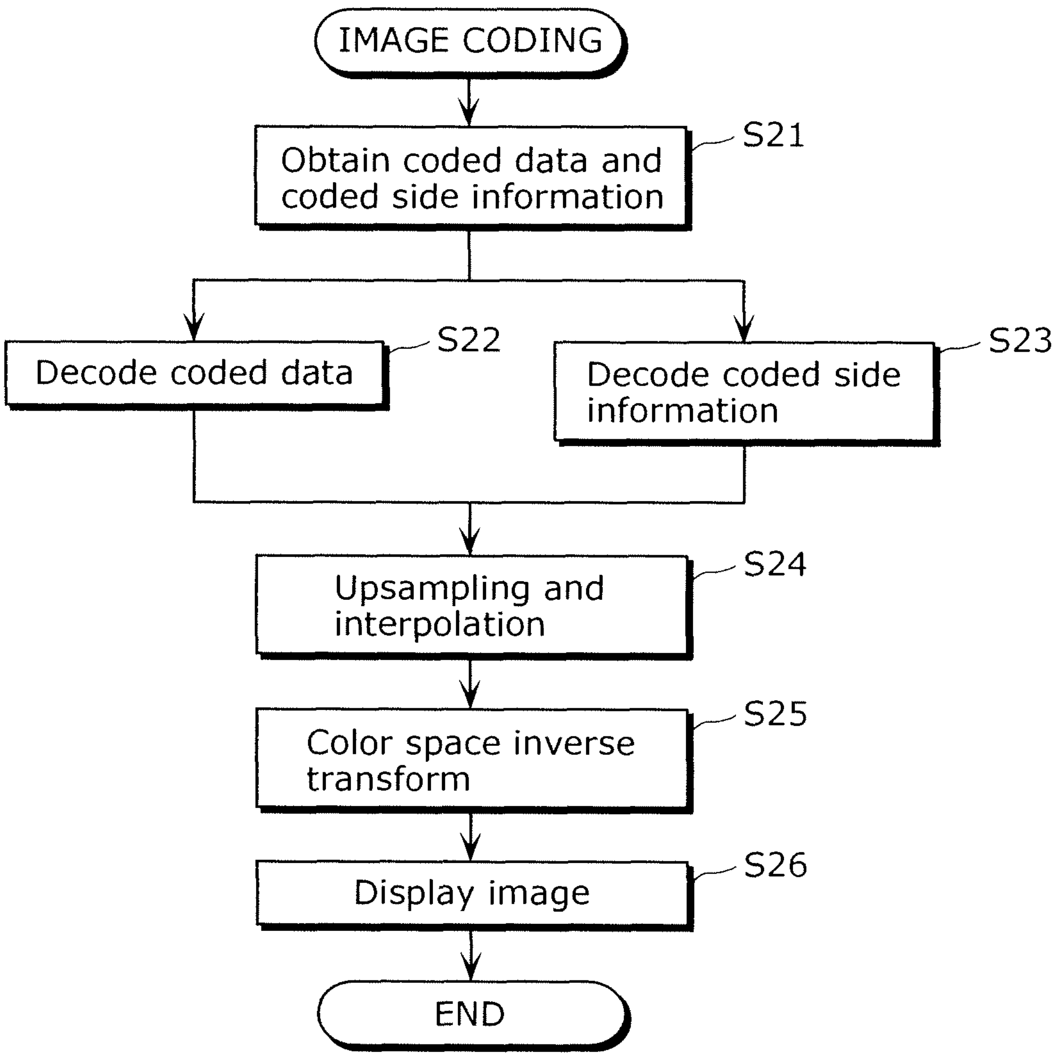
IMAGE CODING
Obtain coded data and coded side information
S21
Decode coded data
S22
Decode coded side information
S23
Upsampling and interpolation
S24
Color space inverse transform
S25
Display image
S26
END

FIG. 8A

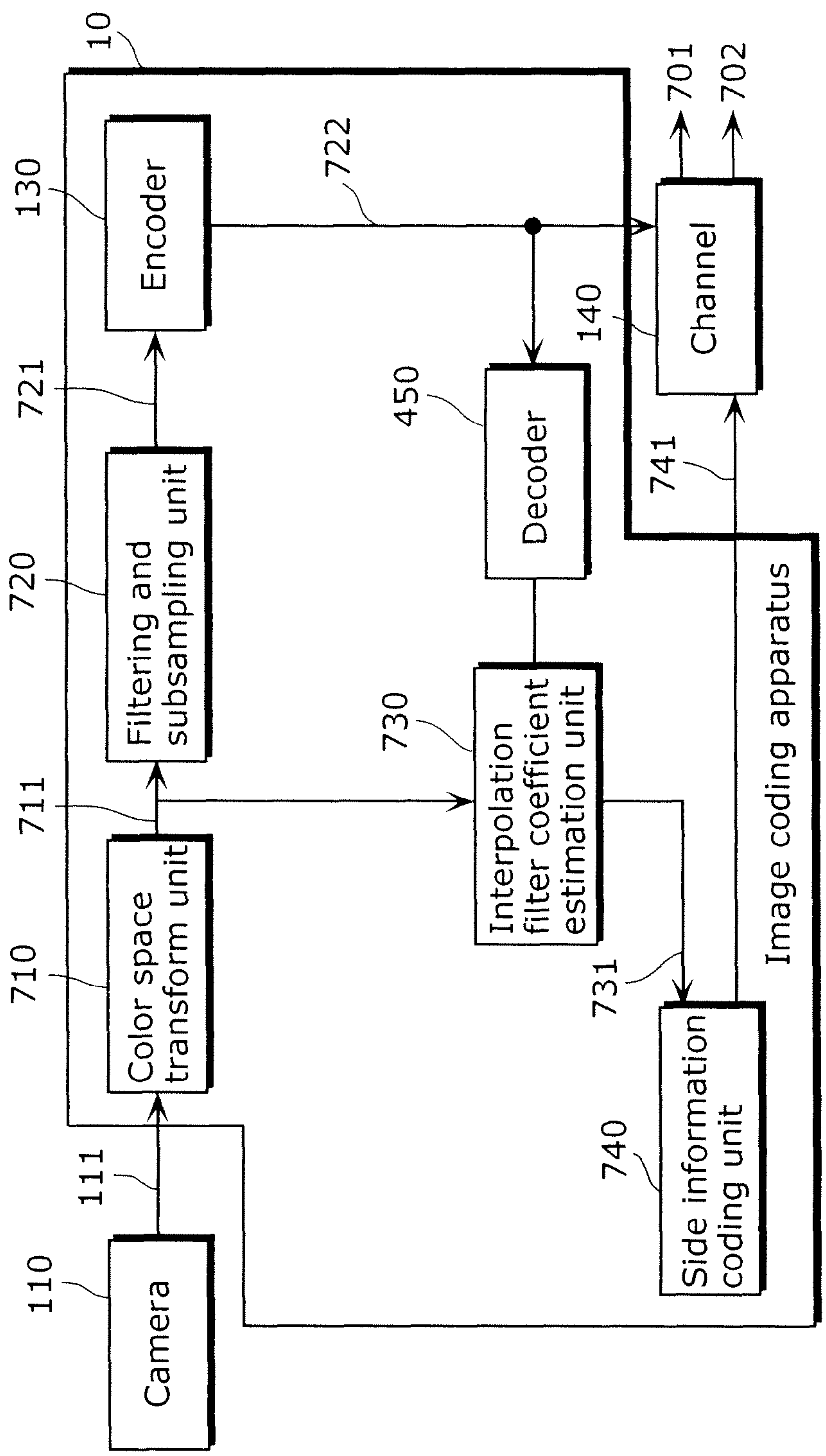
10
Camera
110
111
Color space transform unit
710
711
Filtering and subsampling unit
720
721
Encoder
130
722
Decoder
450
Interpolation filter coefficient estimation unit
730
731
Side information coding unit
740
741
Channel
140
701
702
Image coding apparatus

FIG. 8B

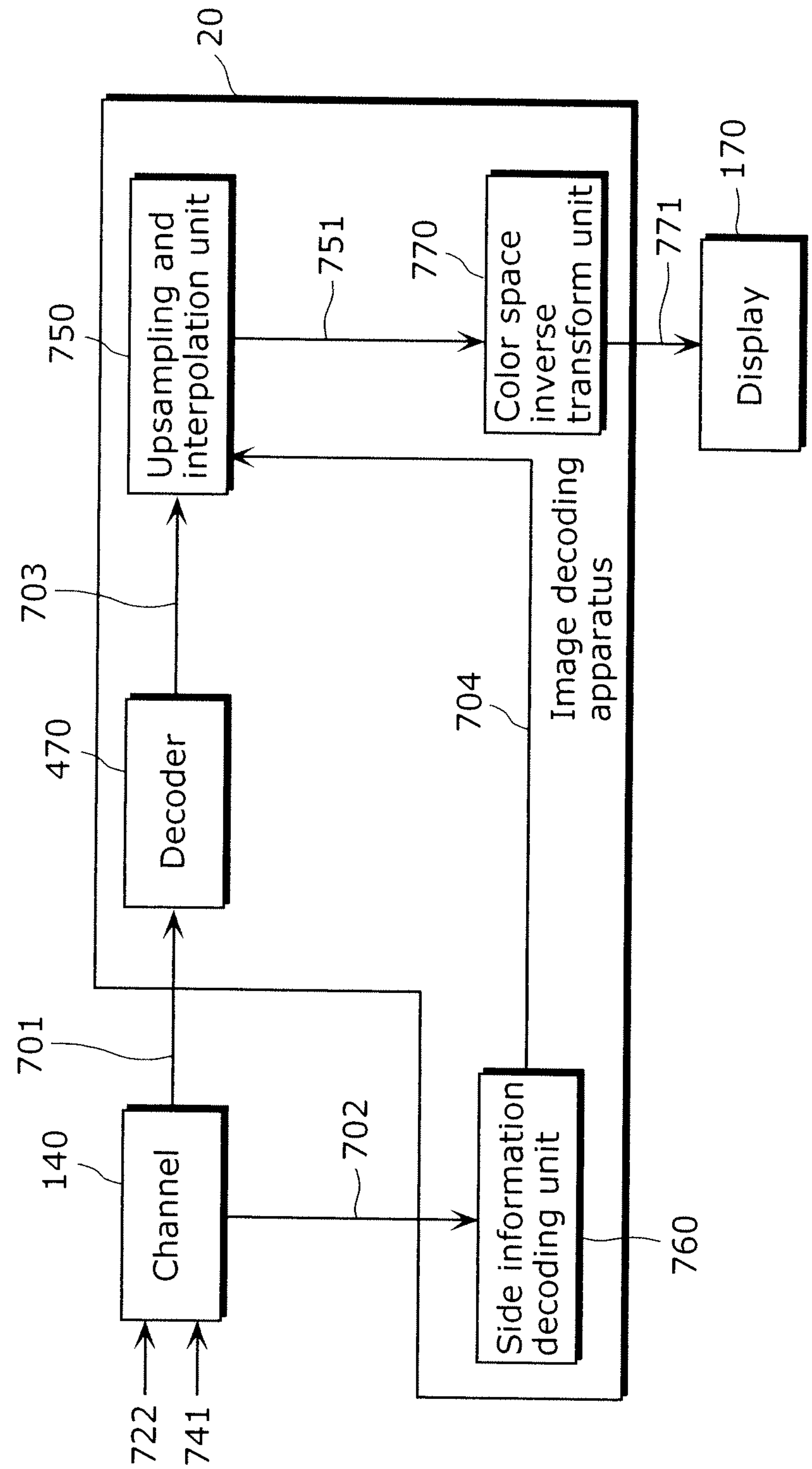
20
Upsampling and interpolation unit
750
751
Color space inverse transform unit
770
771
Display
170
703
Decoder
470
704
Image decoding apparatus
Side information decoding unit
760
701
Channel
140
702
722
741

FIG. 9

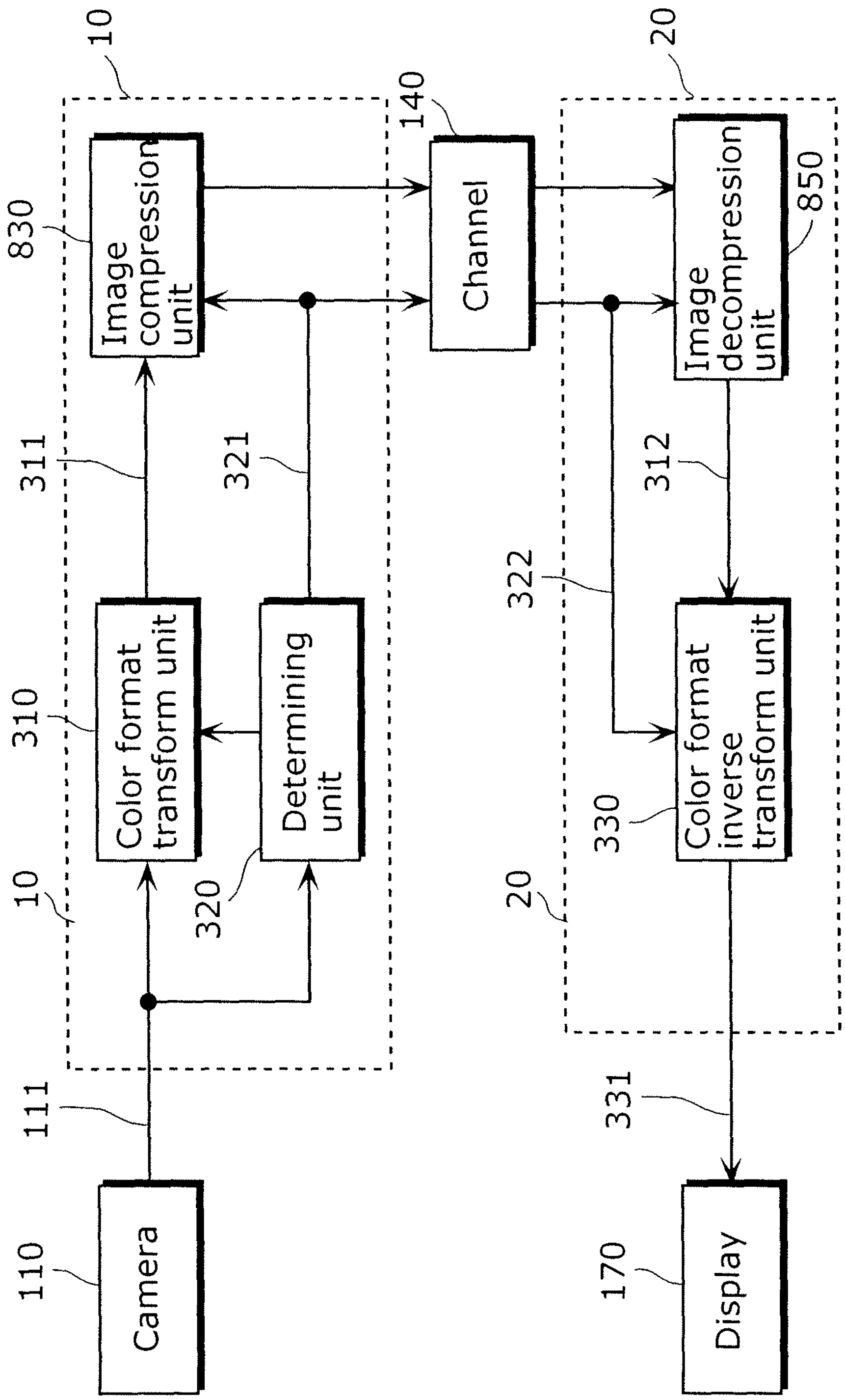
10
830
Image compression unit
140
Channel
20
Image decompression unit
850
311
321
312
322
310
Color format transform unit
Determining unit
320
10
330
Color format inverse transform unit
20
111
331
110
Camera
170
Display

**INTERNATIONAL SEARCH REPORT**

International application No.
PCT/JP2009/003146

A. CLASSIFICATION OF SUBJECT MATTER
H04N7/26(2006.01)i

According to International Patent Classification (IPC) or to both national classification and IPC

B. FIELDS SEARCHED

Minimum documentation searched (classification system followed by classification symbols)
H04N7/24-7/68, H04N11/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Tsuyoshi HANAMURA, Mayumi HARA, Hideyoshi TOMINAGA, 'Color Gazo no Fugoka · Tokucho Kaiseki o Mokuteki to shita Iro Kukan Henkan', Television Gakkai Gijutsu Hokoku, 22 January 1993 (22.01.1993), vol.17, no.6, pages 1 to 6 | 1,2,4-12 |
| Y | JP 7-95563 A (Sony Corp.), 07 April 1995 (07.04.1995), entire text; all drawings (Family: none) | 1,2,4-12 |
| A | JP 2002-223455 A (Nippon Telegraph And Telephone Corp.), 09 August 2002 (09.08.2002), entire text; all drawings (Family: none) | 1-12 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 07 October, 2009 (07.10.09) | 20 October, 2009 (20.10.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/003146

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-203211 A (Canon Inc.), 04 August 1995 (04.08.1995), entire text; all drawings (Family: none) | 1-12 |
| A | WO 2007/010690 A1 (Mitsubishi Electric Corp.), 25 January 2007 (25.01.2007), entire text; all drawings & US 2008/0123947 A1 & EP 1909508 A1 | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1176832 A